Europäisches Patentamt

European Patent Office

Office européen des brevets

(11) Numéro de publication: **0 328 454**
**A1**

## (12) DEMANDE DE BREVET EUROPEEN

(21) Numéro de dépôt: **89400357.3**

(22) Date de dépôt: **08.02.89**

(51) Int. Cl.⁴: **G 07 C 5/12**
**G 01 P 1/14**

(30) Priorité: **10.02.88 FR 8801589**
**01.07.88 FR 8808946**
**02.12.88 FR 8815843**

(43) Date de publication de la demande:
**16.08.89 Bulletin 89/33**

(84) Etats contractants désignés:
**DE ES FR GB IT SE**

(71) Demandeur: **JAEGER**
**2, rue Baudin**
**F-92303 Levallois-Perret (FR)**

(72) Inventeur: **Boucher, Alain**
**182, rue de Charenton**
**F-75012 Paris (FR)**

**Guillou, Jean-Pierre**
**165, rue Saint-Denis**
**F-92700 Colombes (FR)**

(74) Mandataire: **Martin, Jean-Jacques et al**
**Cabinet REGIMBEAU 26, Avenue Kléber**
**F-75116 Paris (FR)**

(54) **Dispositif inscripteur pour enregistreur à deux disques porte-diagramme.**

(57) L'invention concerne un dispositif inscripteur pour enregistreurs à deux disques porte-diagramme, dans des moyens de support et des organes scripteurs permettant une inscription simultanée des deux disques.

Conformément à l'invention, le dispositif inscripteur comporte une table fixe (5) montée sur la porte (2) et définissant avec ladite porte un espace dans lequel sont disposés deux organes scripteurs (8, 9). La table fixe (5) présente une lumière (13) pour permettre une inscription sur la face inférieure du premier disque porte-diagramme par un organe scripteur associé (8). Il est également prévu une table secondaire (22) permettant une inscription sur la face supérieure du deuxième disque porte-diagramme par un organe scripteur associé (9). On peut notamment ainsi disposer d'une inscription du régime moteur en face inférieure du premier disque qui correspond au chauffeur actif.

Application aux enregistreurs de route à deux disques porte-diagramme, conformément à une utilisation dite bi-chauffeur.

FIG.1

**EP 0 328 454 A1**

Bundesdruckerei Berlin

Description

## DISPOSITIF INSCRIPTEUR POUR ENREGISTREUR A DEUX DISQUES PORTE-DIAGRAMME

L'invention concerne un dispositif inscripteur pour enregistreurs à deux disques porte-diagramme, tels que des enregistreurs de route, dénommés en général tachygraphes.

L'enregistrement simultané sur un deuxième disque porte-diagramme est rendu nécessaire dans certaines applications ; en particulier, avec les enregistreurs de route, cela permet d'inscrire la variation d'un paramètre auxiliaire, par exemple le temps de travail et de repos d'un deuxième chauffeur, tandis que le premier disque porte-diagramme est concerné par l'enregistrement de plusieurs données d'utilisation (vitesse du véhicule, type d'activité, distance parcourue), et éventuellement consommation ou régime moteur dans le cas où ce dernier disque est le seul utilisé.

Dans le cas où l'on utilise deux disques porte-diagramme, les enregistreurs connus comportant une indication du régime moteur sont tels que cette indication est systématiquement portée sur le deuxième disque porte-diagramme.

Les disques porte-diagramme utilisés comme supports d'enregistrement doivent pouvoir être facilement placés dans l'enregistreur, et leur extraction doit être possible sans altérer l'enregistrement obtenu. Ces manipulations sont délicates dans le cas d'une utilisation de deux disques porte-diagramme disposés parallèlement et tournant en synchronisme ; c'est pourquoi les dispositifs inscripteurs qui comportent des moyens de support et des organes scripteurs présentent en général une structure dont la complexité est difficilement compatible avec la compacité demandée pour les boîtiers d'enregistreurs.

Selon une technique relativement ancienne, il était prévu de disposer deux disques porte-diagramme coaxialement, avec une entretoise de séparation, l'inscription entre les disques se faisant au moyen d'un système articulé, se déformant parallèlement aux disques, et fixé par un arbre latéral parallèle à l'axe du boîtier, au-delà de la périphérie desdits disques. Citons par exemple le brevet allemand N° 959 232 décrivant un tel dispositif inscripteur, certes robuste, mais encombrant et d'un maniement malaisé pour les opérations d'insertion et d'extraction des disques porte-diagramme. Un autre inconvénient de cette disposition réside dans l'imprécision de l'entraînement des deux disques porte-diagramme serrés aux deux extrémités de l'entretoise cylindrique d'espacement ; or un glissement relatif provoque bien évidemment des erreurs d'interprétation des enregistrements, car la référence horaire n'est plus exactement repérée.

Cette technique a été améliorée depuis, car les exigences d'encombrement sont devenues plus strictes, de sorte qu'une fixation de supports d'organes scripteurs entre la surface intérieure du boîtier et le bord des disques porte-diagramme ne devenait plus possible. Il a été ainsi proposé, pour le montage d'un organe scripteur disposé entre les deux disques porte-diagramme, une assiette-support articulée sur le capot de l'enregistreur au voisinage de la charnière d'articulation de celui-ci. Selon cette conception cependant, les inscriptions telles que l'indication du régime moteur sont toujours portées sur le deuxième disque.

Citons par exemple le brevet français N° 2 164 323 décrivant un tel dispositif inscripteur améliorant très sensiblement les techniques anciennes par sa compacité et son maniement relativement aisé : mise en place d'un premier disque porte-diagramme contre la face intérieure du capot articulé, insertion d'un anneau d'écartement, basculement de l'assiette-support en direction de ladite face intérieure, mise en place du deuxième disque porte-diagramme en passant sous la portion d'entraînement du bras support de l'organe scripteur. Cette structure est cependant complexe, et la présence de l'anneau d'écartement, même clipsable sur l'assiette-support, peut rendre imparfait l'entraînement des deux disques porte-diagramme, et donc introduire une certaine marge d'erreurs dans l'interprétation des enregistrements obtenus. Par ailleurs, l'organe scripteur étant réalisé avec un bras oscillant autour d'un point fixe de l'assiette-support, le tracé de l'enregistrement correspondant se fait par passes curvilignes, ce qui le différencie des passes rectilignes réalisées classiquement par les autres organes scripteurs, et de plus le positionnement dudit organe scripteur est difficile à contrôler parfaitement en raison de la multiplicité des jeux introduits.

Pour compléter cet état de la technique, on peut en outre mentionner la demande de brevet européen N° 0 012 223, dans laquelle est décrit un système prévoyant un renversement global après pivotement pour l'assiette-support, ainsi que les brevets français N° 2 250 161, N° 2 300 342 et N° 2 340 585, dans lesquels le but recherché était d'ailleurs plutôt d'organiser les moyens d'entraînement en vue d'une rotation d'un disque porte-diagramme inversée par rapport à celle de l'autre disque porte-diagramme. On retrouve là encore les inconvénients déjà mentionnés en regard du brevet français N° 2 164 323. Citons pour mémoire le brevet français N° 2 348 535 décrivant un système à platine escamotable.

Il convient de citer également le brevet français N° 2 251 870, dans lequel est décrit un enregistreur à deux disques porte-diagramme dont l'un est en partie fléchi pour permettre une lecture par examen visuel direct des deux enregistrements effectués, grâce à une simple ou une double fenêtre prévue à cet effet. Une telle technique ne donne pas satisfaction, car les deux disques porte-diagramme ne sont supportés que dans leur zone centrale, en étant coincés entre deux plateaux d'appui, ce que ne permet pas d'obtenir des tracés d'enregistrement précis.

La demanderesse a plus récemment proposé des dispositifs inscripteurs pour enregistreurs à deux disques porte-diagramme visant à améliorer la précision de l'enregistrement réalisé par un organe scripteur disposé entre deux disques porte-diagramme, tout en recherchant une structure présentant un encombrement minimal en épaisseur.

Ainsi, la demande de brevet européen N° 0 207 820 décrit un dispositif comportant une table intermédiaire passant entre les deux disques porte-diagramme sur un secteur angulaire de ceux-ci, ladite table étant formée d'une partie fixe montée sur la porte et d'une partie mobile articulée sur ladite partie fixe, et un organe scripteur également articulé sur cette partie fixe. La demande de brevet européen N° 0 246 122 décrit une autre version, dans laquelle le dispositif comporte une table fixe et une table mobile montée coulissante sur ladite table fixe, la liaison coulissante permettant à la fois une inscription par un organe scripteur porté par la table mobile, et un dégagement pour faciliter la mise en place d'un disque sur la table fixe.

Tous ces différents dispositifs restent limités quant au type d'écriture inter-disques. L'enregistrement inscrit sur le deuxième disque porte-diagramme (dénommé ainsi par les praticiens du domaine bien que ce disque soit en fait mis en place avant le premier disque) est relatif au temps de travail et de repos du deuxième chauffeur.

De ce fait, lorsqu'on souhaite disposer d'un paramètre supplémentaire concernant la conduite du conducteur actif, l'enregistrement est effectué sur la face inférieure du deuxième disque porte-diagramme. C'est en particulier le cas pour l'enregistrement du régime moteur (compte-tours).

C'est ainsi que l'on doit examiner, pour un même chauffeur, la face supérieure du premier disque porte-diagramme (par exemple pour la vitesse du véhicule) et la face inférieure du deuxième disque porte-diagramme : ceci complique considérablement l'exploitation des données enregistrées par rapport au cas d'un disque porte-diagramme unique pour lequel les deux faces sont accessibles.

Lors d'un changement de chauffeurs, on procède à une permutation des deux disques porte-diagramme, de sorte qu'on retrouve encore l'inconvénient précité, alors qu'un disque devrait être affecté à un chauffeur et non au véhicule.

Il a par ailleurs été proposé d'autre types de dispositifs inscripteurs, dans lesquels le deuxième disque était inséré dans une fente de la porte. Dans ce cas, le bord du deuxième disque porte-diagramme était pratiquement cintré à angle droit, pour permettre l'inscription du temps de travail ou de repos du deuxième chauffeur sur la face supérieure dudit deuxième disque, grâce à un organe scripteur monté oscillant autour d'un axe parallèle à la face intérieure de la porte.

Si l'on souhaitait disposer d'un paramètre de conduite supplémentaire, par exemple relatif au régime moteur, on utilisait un organe scripteur voisin des trois autres organes scripteurs déjà prévus pour l'inscription sur le premier disque porte-diagramme, indiquant la vitesse du véhicule, le temps d'utilisation et la distance parcourue.

La présence d'un organe scripteur supplémentaire complique la structure, en raison du peu de place disponible, ce qui limite de facto l'enregistrement à une inscription de type logique et exclut un enregistrement de type analogique.

Finalement, aucun des dispositifs inscripteurs connus ne permet d'enregistrer simultanément sur le même disque porte-diagramme les conditions de conduite et un paramètre supplémentaire, tel que le régime moteur, relatifs au premier chauffeur.

L'invention a pour objet de proposer un dispositif inscripteur permettant de résoudre ce problème d'enregistrement simultané sur un même disque, sans que cela nuise à la précision de l'enregistrement ni à la simplicité de la structure.

Un autre objet de l'invention est de proposer un dispositif facilitant l'exploitation des disques porte-diagramme par des moyens de lecture automatique utilisés sur un même disque.

Un autre objet de l'invention est de proposer un dispositif apte à être utilisé avec des dispositifs optionnels de contrôle de présence du disque et/ou de détérioration des organes scripteurs.

Un autre objet de l'invention est que le dispositif soit instantanément adaptable à une utilisation avec un disque porte-diagramme unique, pour le cas d'un seul chauffeur.

Il s'agit plus particulièrement d'un dispositif inscripteur pour enregistreur à deux disques porte-diagramme, ledit enregistreur comportant un boîtier, une porte articulée sur ledit boîtier et un mécanisme d'entraînement des disques porte-diagramme, ledit dispositif inscripteur comportant des moyens de support et des organes scripteurs permettant une inscription simultanée des deux disques porte-diagramme, caractérisé par le fait qu'il comporte une table fixe montée sur la porte, ladite table fixe supportant d'une part une portion d'un premier disque porte-diagramme, et définissant d'autre part avec ladite porte un espace dans lequel sont disposés un premier organe scripteur et un second organe scripteur, et une fente communiquant avec ledit espace pour insérer une portion d'un deuxième disque porte-diagramme, ladite table fixe présentant une lumière pour permettre une inscription sur la face inférieure dudit premier disque porte-diagramme par ledit premier organe scripteur, et par le fait qu'il comporte également une table secondaire, disposée dans ledit espace, pour permettre une inscription sur la face supérieure dudit deuxième disque porte-diagramme par ledit second organe scripteur.

Selon une caractéristique particulière, le premier organe scripteur est monté tournant autour d'un axe parallèle à l'axe commun des disques porte-diagramme ; plus spécialement, cet organe scripteur est fixé sur un axe-support monté sur la porte, au voisinage de la périphérie de celle-ci.

Il est avantageux de prévoir que le premier organe scripteur donne une inscription correspondant au régime moteur.

De préférence, la table secondaire est logée dans un puits radial de la porte, et est montée oscillante entre une position d'effacement correspondant à l'insertion du deuxième disque porte-diagramme, et une position d'écriture.

Dans ce cas, la table secondaire est de préférence montée sur un axe porté par deux paliers solidaires de la porte et prévus au voisinage du puits radial de celle-ci, et un moyen élastique, tel qu'une lame-ressort, est prévu pour rappeler la table secondaire vers sa position d'effacement, de préférence vers une butée d'appui portée par la porte. Il est également intéressant de prévoir que la table secondaire présente, au-delà de son axe d'articulation, une patte d'extrémité qui saille hors de la table fixe, ladite patte coopérant avec le bord du boîtier à la fermeture de la porte pour amener automatiquement ladite table secondaire dans sa position d'écriture.

Avantageusement, la table secondaire présente une portion d'extrémité servant à presser le deuxième disque porte-diagramme contre l'organe scripteur associé, la face de ladite portion tournée vers ledit disque porte-diagramme présentant une fente longitudinale permettant la détection de l'absence dudit disque au moyen d'une lame de contact portée par la table fixe ; en particulier, la lame de contact est disposée sur le passage du deuxième organe scripteur, afin de pouvoir également détecter une détérioration dudit organe scripteur.

Selon une autre caractéristique avantageuse, le deuxième organe scripteur est monté coulissant dans la porte, le déplacement dudit organe scripteur se faisant dans un plan passant par l'axe commun des disques porte-diagramme.

En particulier, le dispositif comporte des moyens de support associés au deuxième organe scripteur, avec un coulisseau mobile en translation parallèlement à la face intérieure de la porte, ledit coulisseau supportant à une extrémité un cavalier portant ledit organe scripteur, et étant relié par son autre extrémité à des moyens d'actionnement disposés dans la porte. Plus spécialement, les moyens d'actionnement comportent un levier se déplaçant parallèlement à la face intérieure de la porte, ledit levier portant une came tournante que contacte le coulisseau et étant déplaçable entre des positions angulaires prédéterminées correspondant au mode d'utilisation, et la came tournante est entraînée par une roue dentée, ladite roue dentée étant calée sur l'axe de pivotement du levier et reliée au mouvement d'entraînement d'une montre prévue dans l'enregistreur. De préférence, le coulisseau est soumis à l'action d'un ressort le tirant en direction de la came tournante, une butée fixe étant en outre prévue pour l'appui dudit coulisseau lorsque la position du levier correspond à un mode d'utilisation indiqué par un trait d'enregistrement circulaire continu.

Avantageusement enfin, la table fixe est un bloc indépendant, fixé sur la porte, ledit bloc présentant de préférence un couvercle amovible pour faciliter l'accès aux premier et second organes scripteurs.

Conformément à une variante de l'invention, il est possible de perfectionner le dispositif précité, afin de faciliter encore la mise en place du deuxième disque porte-diagramme, lequel est, il convient de le rappeler, le premier mis en place.

Plus précisément, lorsque la porte est ouverte, et que l'opérateur souhaite insérer ou retirer le deuxième disque porte-diagramme, la pointe du second organe scripteur se trouve plus ou moins dans le passage dudit disque, ce qui risque d'abîmer le disque en le griffant ou en le tordant.

L'objet de cette variante est de résoudre le problème de l'éventuelle présence de la pointe du second organe scripteur, afin d'écarter tout risque de détérioration du deuxième disque, lors de l'insertion ou du dégagement de celui-ci, et ce sans que cela n'entraîne une complication excessive de la structure.

Il s'agit plus particulièrement d'un dispositif du type précité, caractérisé par le fait qu'il comporte en outre un cache mobile d'escamotage associé au second organe scripteur, ledit cache étant disposé dans ledit espace défini par la table fixe et la porte, et étant déplaçable entre une position d'escamotage, lorsque la table secondaire est en position d'effacement correspondant à l'insertion du deuxième disque porte-diagramme, dans laquelle la pointe dudit organe scripteur est rentrée pour être écartée du passage emprunté par ledit deuxième disque, et une position d'écriture, lorsque ladite pointe est saillante pour permettre une inscription correcte sur la portion concernée du deuxième disque porte-diagramme.

De préférence, lorsqu'il s'agit d'un dispositif dans lequel le deuxième organe scripteur est monté coulissant dans la porte, par l'intermédiaire d'un coulisseau mobile en translation parallèlement à la face intérieure de la porte, ledit coulisseau supportant à une extrémité un cavalier portant ledit organe scripteur et étant relié par son autre extrémité à des moyens d'actionnement disposés dans la porte, le cache mobile d'escamotage est monté sur le cavalier portant le deuxième organe scripteur, en étant disposé entre ledit organe scripteur et la table secondaire.

Selon un mode de réalisation avantageux, le cache mobile d'escamotage est monté pivotant sur le cavalier ; en particulier, lorsqu'il s'agit d'un dispositif dans lequel la table secondaire est montée pivotante sur la porte, les axes d'articulation de la table secondaire et du cache mobile d'escamotage sont sensiblement parallèles, leur direction étant en outre parallèle à la face intérieure de la porte.

De préférence alors, le cache mobile d'escamotage présente au voisinage d'une de ses extrémités une ouverture pour le passage de la pointe du second organe scripteur, le cache mobile d'escamotage comportant, au-delà de ladite ouverture, un becquet venant en appui contre une butée associée de la table fixe lorsque ledit cache est en position d'écriture. Avantageusement, un moyen élastique, tel qu'une lame-ressort, est en outre prévu pour rappeler en permanence le cache mobile d'escamotage vers sa position d'écriture, c'est-à-dire vers son appui contre la butée associée ; en particulier, le moyen élastique est constitué par une portion du second organe scripteur, qui est en appui contre une protubérance associée du cache mobile d'escamotage.

Il est particulièrement avantageux de faire en sorte que le déplacement du cache mobile d'escamotage résulte directement du mouvement de la table secondaire, grâce à la présence d'un organe intermédiaire de couplage.

Par exemple, l'organe intermédiaire de couplage peut être une pièce coulissante se déplaçant dans une rainure associée du cavalier. En particulier, cette pièce coulissante comporte deux pattes saillantes, la première coopérant avec l'extrémité du cache mobile d'escamotage opposée à celle qui est adjacente à la pointe du second organe scripteur, et la seconde coopérant avec un becquet associé de la table secondaire ; plus spécialement, lorsque le cache mobile d'escamotage et la table secondaire sont en position d'écriture, un jeu de sécurité est assuré pour supprimer tout contact en fonctionnement entre lesdites pattes saillantes et les parties associées dudit cache et de ladite table.

De préférence, lorsqu'il s'agit d'un dispositif dans lequel la table secondaire présente une portion d'extrémité servant à presser le deuxième disque porte-diagramme, la face de ladite portion tournée vers ledit disque présentant une fente longitudinale permettant la détection de l'absence dudit disque au moyen d'une lame de contact portée par la table fixe, la lame de contact est alors disposée entre le second organe scripteur et le cache mobile d'escamotage.

Plus particulièrement encore, lorsqu'il s'agit d'un dispositif dans lequel la table secondaire présente, au-delà de son axe d'articulation, une patte d'extrémité qui saille hors de la table fixe, ladite patte coopérant avec le bord du boîtier à la fermeture de la porte pour amener automatiquement ladite table secondaire dans sa position d'écriture, il est alors avantageux, une fois la porte fermée, que le second organe scripteur soit en appui par l'effet de son élasticité contre la lame de contact, cet appui ne pouvant être supprimé que par la présence d'un disque porte-diagramme entre la table secondaire et le cache mobile d'escamotage, ce qui permet d'assurer à la fois la détection de l'absence dudit disque et la détection d'une détérioration dudit organe scripteur.

Conformément à une autre variante de l'invention, il est possible de perfectionner le dispositif conforme à la variante précitée, afin de faciliter encore la mise en place du deuxième disque porte-diagramme.

Il s'agit plus particulièrement d'un dispositif du type précité, caractérisé par le fait qu'il comporte en outre un cache mobile d'escamotage associé au second organe scripteur, ledit cache étant disposé dans ledit espace défini par la table fixe et la porte, et étant déplaçable entre une position d'escamotage, lorsque la table secondaire est en position d'effacement correspondant à l'insertion du deuxième disque porte-diagramme, dans laquelle la pointe dudit organe scripteur est rentrée pour être écartée du passage emprunté par ledit deuxième disque, et une position d'écriture, lorsque ladite table secondaire est en position d'écriture, dans laquelle ladite pointe est saillante pour permettre une inscription correcte sur la portion concernée du deuxième disque porte-diagramme, et en ce que la table secondaire et le cache mobile d'escamotage sont tous deux montés pivotants selon deux axes sensiblement parallèles entre eux, ladite table secondaire étant montée pivotante sur la porte et ledit cache mobile d'escamotage étant monté pivotant sur la table fixe.

Un tel montage est à la fois simple et fiable, car il limite les pièces nécessaires et il permet d'éviter tout mouvement parasite du cache mobile d'escamotage dont la référence reste fixe : ceci est intéressant dans la pratique, car on parvient ainsi à éliminer tout risque de frottement de l'extrémité du cache mobile sur le disque porte-diagramme adjacent (un tel frottement peut même aller jusqu'à un marquage du disque).

De préférence, la table secondaire et le cache mobile d'escamotage sont normalement découplés, sauf lorsque ladite table secondaire est en position d'effacement et ledit cache mobile en position d'escamotage, par l'intermédiaire d'un contact de butée ; en particulier, la table secondaire comporte un becquet arrière saillant pouvant coopérer avec une patte arrière associée du cache mobile d'escamotage.

Avantageusement en outre, lorsque le cache mobile d'escamotage et la table secondaire sont en position d'écriture, un jeu de sécurité est assuré, pour éviter tout contact en fonctionnement entre le becquet arrière saillant et la patte arrière associée.

Il est également intéressant que le dispositif inscripteur comporte en outre des moyens élastiques tendant à rappeler en permanence la table secondaire vers sa position d'effacement et le cache mobile d'escamotage vers sa position d'écriture.

De préférence alors, la table secondaire et le cache mobile d'escamotage sont rappelés vers une position d'appui contre une butée associée respectivement solidaire de la porte et de la table fixe ; en particulier, des moyens de rappel indépendants sont prévus, selon une lame ressort pour la table secondaire et un étrier ressort pour le cache mobile d'escamotage.

Selon un mode de réalisation avantageux, le cache mobile d'escamotage a sensiblement la forme d'un H dont deux branches définissent un passage pour l'extrémité du second organe scripteur portant la pointe d'inscription.

De préférence alors, les deux branches du cache mobile d'escamotage entre lesquelles passe l'extrémité du second organe scripteur se terminent par un becquet facilitant l'insertion du deuxième disque porte-diagramme sous ledit cache mobile lorsque celui-ci est en position d'escamotage ; il est en outre intéressant que le cache mobile d'escamotage présente une fente transversale dans laquelle est reçue une branche centrale de l'étrier ressort assurant le rappel dudit cache mobile.

De préférence également, lorqu'il s'agit d'un dispositif dans lequel la table secondaire présente une portion d'extrémité servant à presser le deuxième disque porte-diagramme, la face de ladite portion tournée vers ledit disque présentant une fente longitudinale permettant la détection de l'absence dudit disque au moyen d'une lame de contact portée par la table fixe, la lame de contact comporte alors une partie principale transversale montée sur la table fixe, et deux pattes incurvées solidaires de ladite partie principale et s'étendant vers l'arrière pour définir une forme en U dans laquelle vient se loger l'extrémité du second organe scripteur, de telle façon que la pointe de cet organe scripteur puisse saillir vers le bas au-delà desdites pattes.

Plus particulièrement encore, lorsqu'il s'agit d'un dispositif dans lequel la table secondaire présente, au-delà de son axe d'articulation, une patte d'extrémité qui saille hors de la table fixe, ladite patte coopérant avec le bord du boîtier à la fermeture de la porte pour amener automatiquement ladite table secondaire dans sa position d'écriture, il est alors avantageux, une fois la porte fermée, que le second organe scripteur soit en appui par l'effet de son élasticité contre les deux pattes de la lame de contact. cet appui ne pouvant être supprimé que par la présence d'un disque porte-diagramme entre la table secondaire et le cache mobile d'escamotage, ce qui permet d'assurer à la fois la détection de l'absence dudit disque et la détection d'une détérioration dudit organe scripteur.

Il est en outre avantageux que l'une au moins des deux branches du cache mobile d'escamotage entre lesquelles passe l'extrémité du second organe scripteur présente un ergot dont l'extrémité passe dans la forme en U définie par une patte de la lame de contact et la partie principale de ladite lame de contact. de telle sorte que la lame de contact assure en outre une fonction de butée pour le cache mobile d'escamotage, aussi bien en position haute de celui-ci contre ladite partie principale qu'en position basse de celui-ci contre ladite patte.

De préférence enfin, la lame de contact est une pièce unique, avec deux pattes longitudinales repliées inférieurement sous une partie principale sensiblement rectangulaire, et une cosse latérale de raccordement.

D'autres caractéristiques et avantages de l'invention apparaîtront plus clairement à la lumière de la description qui va suivre et du dessin annexé, concernant un mode de réalisation particulier d'un dispositif inscripteur perfectionné conformément à l'invention. en référence aux figures où :

    - la figure 1 est une vue éclatée en perspective, montrant un enregistreur dont la porte articulée est ouverte, et équipé d'un dispositif inscripteur conforme à l'invention, les deux disques porte-diagramme destinés à être reçus n'étant pas représentés pour faciliter la clarté de la figure ;

    - les figures 2a et 2b sont deux coupes partielles illustrant l'enregistreur précédent, respectivement avec la porte ouverte et avec la porte fermée, après mise en place de deux disques porte-diagramme, permettant notamment de bien distinguer la disposition des organes scripteurs, de la table fixe et de la table intermédiaire pivotante ;

    - les figures 3a, 3b, 3c sont des vues schématiques illustrant diverses possibilités de contrôle, grâce à une lame montée sur la table fixe, et une conformation particulière de l'extrémité de la table intermédiaire pivotante ;

    - les figures 4a, 4b, 4c sont des vues partielles illustrant les moyens d'actionnement associés à l'organe scripteur coulissant, respectivement dans des conditions de repos, de conduite et de chargement ou de maintenance, chacune de ces conditions donnant lieu à un trait d'enregistrement d'épaisseur différente ;

    - la figure 5 est une coupe illustrant la porte articulée d'un enregistreur équipé d'un dispositif inscripteur conforme à une variante de l'invention, les deux disques porte-diagramme destinés à être reçus n'étant pas encore mis en place, avec notamment un organe formant cache mobile d'escamotage permettant d'effacer la pointe du second organe scripteur du passage concerné pour l'insertion du deuxième disque porte-diagramme ;

    - la figure 6 une vue de dessus du dispositif précédent, dont le couvercle supérieur a été enlevé, vue sur laquelle est en outre partiellement représenté le premier organe scripteur servant pour l'inscription sur la face inférieure du premier disque, afin d'enregistrer les variations d'un paramètre de conduite supplémentaire, en particulier le régime moteur ;

    - la figure 7 est une vue de dessus du cavalier supportant le second organe scripteur et le cache mobile d'escamotage ;

    - la figure 8 est une coupe selon VIII-VIII de la figure 7, permettant de mieux distinguer la structure du cavalier précité ;

    - la figure 9 est une vue de dessus du cache mobile d'escamotage ;

    - la figure 10 est une coupe selon X-X de la figure 9, permettant de mieux distinguer la structure du cache précédent ;

    - les figures 11a, 11b et 11c sont des coupes partielles analogues à celle de la figure 5, illustrant le dispositif conforme à cette variante de l'invention respectivement lors de l'insertion du deuxième disque porte-diagramme (porte ouverte), après la mise en place des deux disques porte-diagrmame (porte fermée), et en cas de fermeture de la porte sans avoir inséré un deuxième disque porte-diagramme ;

    - les figures 12a, 12b et 12c sont des vues schématiques illustrant la possiblité d'un contrôle au moyen d'une lame de contact montée sur la table fixe, et correspondant respectivement aux positions illustrées aux figures 11a, 11b et 11c ;

    - la figure 13 est une coupe illustrant la porte articulée d'un enregistreur équipé d'un dispositif inscripteur conforme à une autre variante de l'invention, les deux disques porte-diagramme destinés à être reçus n'étant pas encore mis en place, avec également un organe formant cache mobile d'escamotage permettant d'effacer la pointe du second organe scripteur du passage concerné pour l'insertion du deuxième disque porte-diagramme ;

    - la figure 14 est une vue de dessus du dispositif précédent, dont le couvercle supérieur a été enlevé, vue sur laquelle est en outre partiellement représenté (en traits mixtes) le premier organe scripteur servant à l'inscription sur la face inférieure du premier disque, pour enregistrer les variations d'un paramètre de conduite supplémentaire, en particulier le régime moteur ;

    - la figure 15 est une vue de dessus du cavalier supportant le second organe scripteur ;

- la figure 16 est une coupe selon XVI-XVI de la figure 15, permettant de mieux distinguer la structure du cavalier de support précité ;

- la figure 17 est une vue de dessus du cache mobile d'escamotage, réalisé ici en forme de H ;

- la figure 18 est une coupe selon XVIII-XVIII de la figure 17, permettant de mieux distinguer la structure du cache mobile précité ;

- la figure 19 est une vue de dessus de l'étrier ressort assurant le rappel du cache mobile d'escamotage ;

- la figure 20 est une coupe selon XX-XX de la figure 19, permettant de mieux distinguer la forme particulière de l'étrier ressort précité ;

- la figure 21 est une vue en perspective de la lame de contact servant à la détection de la présence du deuxième disque porte-diagramme, et assurant en outre une fonction mécanique de butée pour le cache mobile d'escamotage ;

- la figure 22 est une coupe selon XXII-XXII de la figure 21, permettant de mieux distinguer la forme en U que définit la lame de contact précitée, grâce à ses deux pattes incurvées ;

- les figures 23a, 23b et 23c sont des coupes partielles analogues à celle de la figure 13, illustrant le dispositif conforme à cette autre variante de l'invention respectivement lors de l'insertion du deuxième disque porte-diagramme (la porte ouverte n'est pas représentée), après la mise en place des deux disques porte-diagramme (porte fermée), et en cas de fermeture de la porte sans avoir inséré un deuxième disque porte-diagramme ;

- les figures 24a, 24b et 24c sont des vues schématiques illustrant la possibilité d'un contrôle au moyen d'une lame de contact, telle que celle illustrée aux figures 21 et 22, montée sur la table fixe, et correspondant respectivement aux positions illustrées aux figures 23a, 23b et 23c.

Le dispositif inscripteur qui va être décrit est destiné à équiper un enregistreur de route à deux disques porte-diagramme, communément appelé tachygraphe, mais il va de soi que l'invention n'est pas limitée à un tel type d'enregistreur.

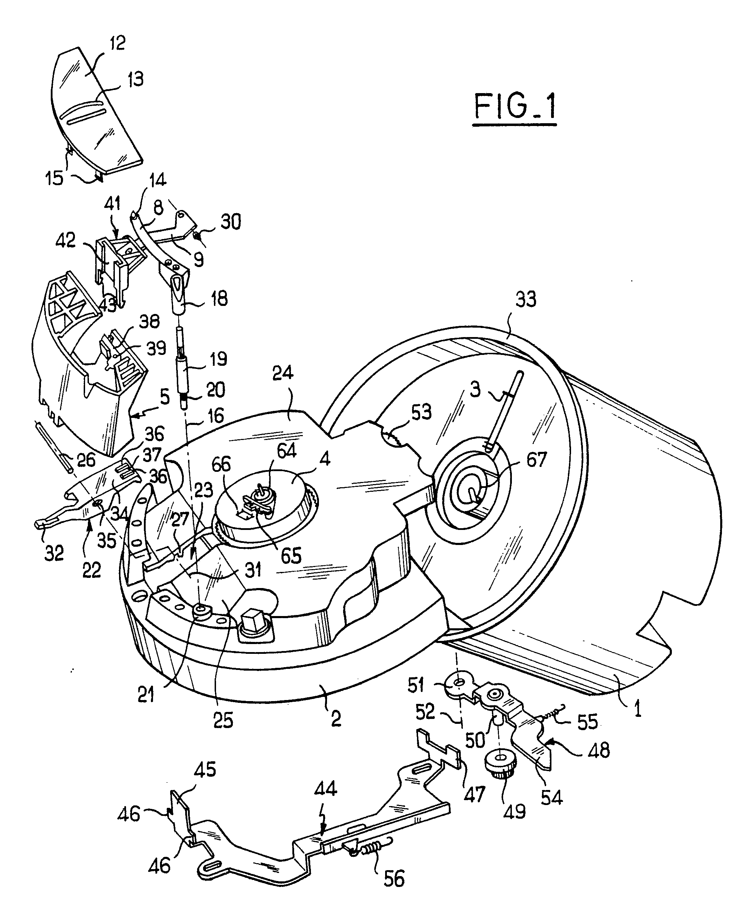

Ainsi qu'illustré en figure 1, l'enregistreur comporte un boîtier 1, une porte 2 articulée sur ledit boîtier, et un mécanisme d'entraînement (non représenté) des disques porte-diagramme. L'enregistreur de route représenté pour recevoir deux disques porte-diagramme, c'est-à-dire un premier disque servant au support d'enregistrement par des organes scripteurs 3 (indiquant la vitesse du véhicule, le type d'activité, la distance parcourue), et un deuxième disque porte-diagramme servant à inscrire la variation d'un paramètre auxiliaire, par exemple le temps de travail et de repos d'un deuxième chauffeur. Dans la suite de la description, ces deux disques porte-diagramme seront dénommés respectivement premier et deuxième disques pour la clarté de l'exposé, bien que le disque dénommé deuxième disque soit en fait inséré en premier dans l'enregistreur.

Conformément à un principe essentiel de la présente invention, les deux disques montés superposés de manière isoaxique sur une couronne support 4 sont écartés l'un de l'autre seulement sur un secteur angulaire de ceux-ci, correspondant à l'enregistrement inter-disques, avec possibilité d'accéder à la face inférieure du premier disque pour enregistrer les variations d'un paramètre de conduite supplémentaire, en particulier le régime moteur : le dispositif inscripteur de l'invention permet ainsi d'enregistrer simultanément sur le même disque porte-diagramme les conditions de conduite et un paramètre supplémentaire relatif au premier chauffeur. Cet accès aux deux faces du premier disque est extrêmement intéressant lorsque deux disques porte-diagramme sont utilisés, car l'on retrouve toutes les possibilités d'exploitation par des moyens de lecture automatique jusque-là limités aux enregistreurs à disque porte-diagramme unique.

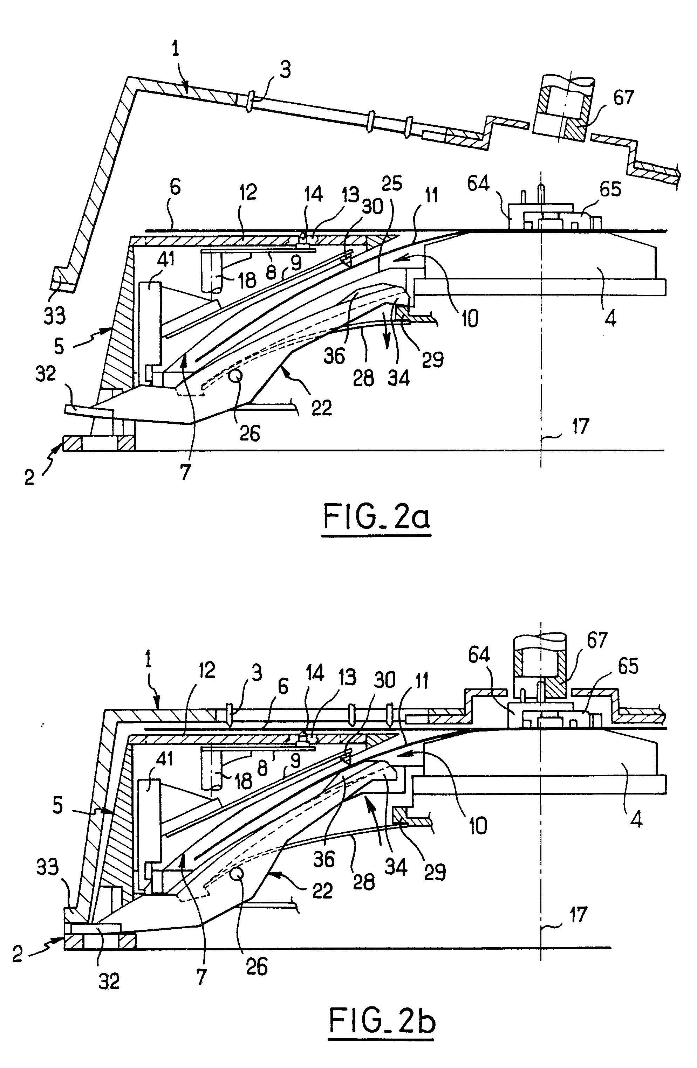

La structure du dispositif de l'invention va maintenant être décrite en détail en regard de la vue éclatée en perspective de la figure 1, et des coupes des figures 2a et 2b illustrant l'enregistreur, respectivement avec la porte ouverte et avec la porte fermée, après mise en place de deux disques porte-diagramme.

Conformément à une caractéristique essentielle de l'invention, le dispositif inscripteur comporte une table fixe 5 montée sur la porte 2, ladite table fixe supportant d'une part une portion d'un premier disque porte-diagramme 6, et définissant avec la porte 2 un espace 7 dans lequel sont disposés un premier organe scripteur 8 et un second organe scripteur 9, et une fente 10 communiquant avec ledit espace pour insérer une portion d'un deuxième disque porte-diagramme 11. La table fixe 5 présente en sa partie supérieure, c'est-à-dire en l'espèce en son couvercle 12, une lumière traversante 13 pour laisser passer la pointe 14 de l'organe scripteur 8 et ainsi permettre une inscription sur la face inférieure du premier disque porte-diagramme 6 par ledit organe scripteur. La table fixe 5 se présente ainsi sous la forme d'un bloc indépendant fixé sur la porte 2, représentant de préférence un couvercle amovible 12 fixé sur le restant du bloc par des pattes élastiques 15 ; l'enlèvement du couvercle 12 facilite ainsi considérablement l'accès aux premier et second organes scripteurs 8, 9, sans qu'il soit besoin de démonter toute la table fixe 5.

Le premier organe scripteur 8 est ici monté tournant autour d'un axe 16 (figure 1) parallèle à l'axe commun 17 des disques porte-diagramme 6, 11 (figures 2a et 2b). Un tel montage n'est naturellement nullement limitatif, et l'on pourrait aussi bien prévoir un premier organe scripteur monté coulissant dans la porte 2. Du fait du montage tournant de l'organe scripteur 8, la lumière traversante 13 est naturellement incurvée en arc de cercle. Le premier organe scripteur 8 comporte un manchon de support 18 qui est monté sur un axe-support 19. Cet axe-support comporte une denture d'entraînement 20, et est monté sur la porte 2, au niveau d'un bossage 21 prévu au voisinage de la périphérie de ladite porte. La figure 2b permet de bien comprendre comment, lorsque la porte de l'enregistreur est fermée, on peut réaliser un enregistrement simultanément sur la face supérieure du disque porte-diagramme 6 (au moyen des organes scripteurs conventionnels 3) et sur la face inférieure dudit disque porte-diagramme (au moyen de la pointe d'inscription 14 de l'organe scripteur 8), ce qui ouvre une possibilité nouvelle qu'aucun enregistreur connu n'a offerte jusque-là, permettant ainsi en particulier de reporter sur le premier disque une inscription correspondant au régime moteur.

Conformément à une autre caractéristique du dispositif inscripteur de l'invention, il est également prévu une table secondaire 22, disposée dans l'espace 7 défini par la table fixe 5 et la porte 2, pour permettre une inscription sur la face supérieure du deuxième disque porte-diagramme 11 par le second organe scripteur 9. Comme on peut le voir sur la figure 1, la table secondaire 22 est logée dans un puits radial 23 de la porte 2 ladite porte présentant une face intérieure 24 perpendiculaire à l'axe commun 17 des deux disques porte-diagrmame, pour le support desdits disques dans une zone où ceux-ci sont au contact l'un de l'autre, et une face inclinée 25 permettant de définir la fente 10 d'insertion du deuxième disque porte-diagramme 11.

Dans le mode de réalisation qui est décrit, la table secondaire 22 est mobile, en particulier montée oscillante, tandis que le deuxième organe scripteur 9 est monté coulissant dans la porte 2, le déplacement dudit organe scripteur se faisant dans un plan passant par l'axe commun 17 des disques porte-diagramme 6, 11. Il va de soi cependant que l'on pourrait aussi bien prévoir une table secondaire fixe et un organe scripteur présentant une possibilité de débattement entre une position d'effacement correspondant à l'insertion du deuxième disque porte-diagramme 11, et une position d'écriture. Le mode de réalisation qui est décrit est cependant préféré, car il procure une meilleure fiabilité et simplifie la structure des organes constitutifs.

La table secondaire 22 est ainsi montée sur un axe-support 26 porté par deux paliers 27 (un seul palier est visible sur la figure 1) solidaires de la porte 2 et prévus au voisinage du puits radial 23 de celle-ci. Si l'on se reporte aux figures 2a et 2b, on distingue un moyen élastique, ici réalisé sous la forme d'une lame-ressort 28, ledit moyen étant prévu pour rappeler la table secondaire 22 vers une position d'effacement correspondant à l'insertion du deuxième disque porte-diagramme 11, et de préférence vers une butée d'appui 29 portée par la porte 2. Ainsi, lorsque la porte est ouverte, la table secondaire 22 est en appui contre la butée 29, libérant au maximum l'accès par la fente 10 d'insertion du deuxième disque porte-diagramme : c'est la position illustrée en figure 2a. Par contre, lorsque la porte est fermée, il convient de faire basculer la table secondaire 22 vers une position d'écriture dans laquelle ladite table agit comme un presseur appliquant le deuxième disque porte-diagramme 11 contre la pointe 30 de l'organe scripteur 9 associé. Le mode de réalisation qui est décrit ici illustre une façon simple de résoudre ce problème : la table secondaire 22 présente en effet, au-delà de son axe d'articulation 31, une patte d'extrémité 32 qui saille hors de la table fixe 5, ladite patte coopérant avec le bord 33 du boîtier 1 à la fermeture de la porte 2 pour amener automatiquement ladite table secondaire dans sa position d'écriture. La table secondaire 22 présente par ailleurs une portion d'extrémité 34 servant à presser le deuxième disque porte-diagramme 11 contre l'organe scripteur associé, ladite portion s'étendant naturellement de l'autre côté de l'axe d'oscillation de la table secondaire, c'est-à-dire des orifices 35 prévus pour le passage de l'axe-support 26, par rapport à la patte d'extrémité saillante 32. La portion d'extrémité 34 présente, en sa face tournée vers le disque porte-diagramme 11, deux rebords longitudinaux 36 définissant une fente 37 qui permet la détection de l'absence du disque au moyen d'une lame de contact portée par la table fixe 5. La figure 1 permet de distinguer une lame de contact élastique 38 fixée par un rivet 39 sur le bloc de la table fixe 5.

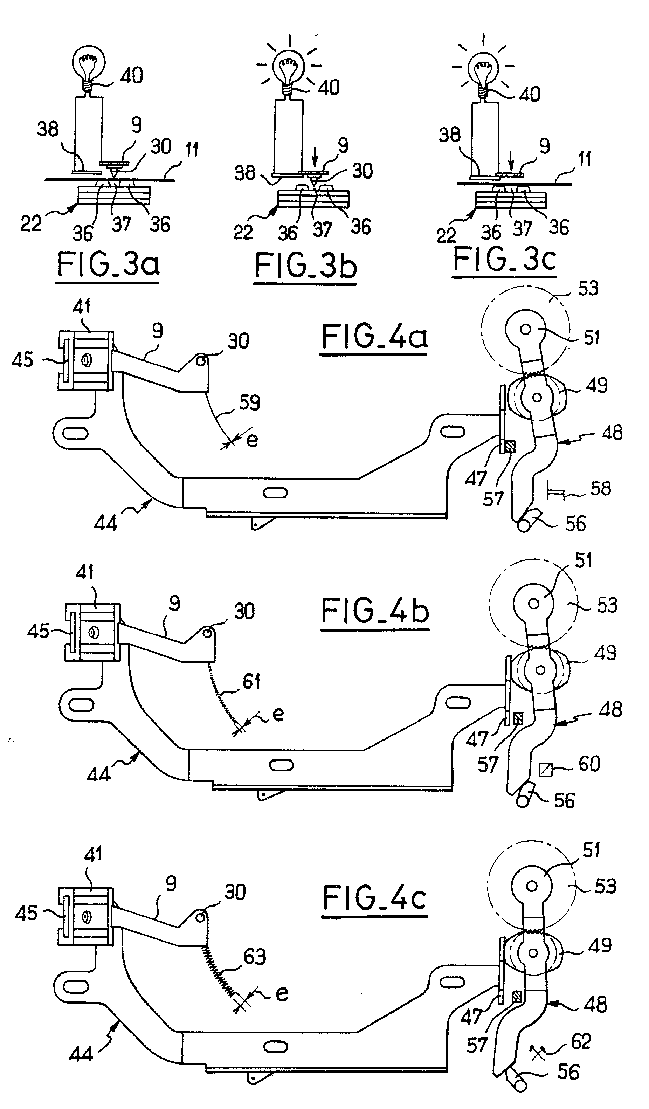

Les figures 3a à 3c permettent de bien comprendre comment fonctionne un tel système de détection. On distingue sur ces figures un circuit électrique comportant un témoin d'alerte 40, ici lumineux, le circuit étant fermé lorsque l'organe scripteur 9 contacte l'alarme 38. Ce témoin lumineux sera prévu en face avant du cadran de la porte 2, mais il pourrait naturellement être remplacé par un témoin sonore.

- Figure 3a : la position est normale, et la pointe d'inscription 30 de l'organe scripteur 9 est au contact du disque porte-diagramme 11, de sorte que le circuit de contrôle est ouvert : la lampe est éteinte.

- Figure 3b : il s'agit d'une première condition anormale détectée, c'est-à-dire l'absence du disque porte-diagramme 11 : la pointe d'écriture 30 pénètre, grâce à l'élasticité propre de l'organe scripteur 9, dans la fente 37, ce qui ferme le contact : le témoin lumineux s'allume.

- Figure 3c : il s'agit d'une deuxième condition anormale détectée, à savoir la détérioration de l'organe scripteur (stylet cassé). L'absence de pointe d'écriture 30 fait que l'organe scripteur 9 défectueux contacte la lame 38 et ferme le circuit : le témoin 40 s'allume encore.

On va maintenant décrire les moyens de support et d'actionnement du deuxième organe scripteur 9. Si l'on se reporte à la figure 1, on distingue ainsi un cavalier 41 sur lequel est fixée (par exemple par rivetage) la lame de l'organe scripteur ledit cavalier étant de préférence réalisé en matière plastique. Ce cavalier comporte, en sa face arrière, deux rebords définissant une rainure 42, lesdits rebords se terminant par des pattes d'accrochage 43. Le cavalier support 41 peut ainsi être monté sur l'extrémité d'un coulisseau 44 mobile en translation parallèlement à la face intérieure de la porte 2. Le coulisseau 44 présente ainsi une extrémité 45 reçue dans la glissière 42, ladite extrémité présentant deux pattes latérales 46 pour l'accrochage des pattes de fixation 43. Le coulisseau 44 passe ainsi dans la porte 2, sous la face intérieure 24 de celle-ci. L'autre extrémité 47 du coulisseau permet la transmission du mouvement de l'organe scripteur 9, grâce à sa coopération avec des moyens d'actionnement décrits ci-après. On distingue ainsi un levier 48 se déplaçant parallèlement à la face intérieure de la porte 2, ledit levier portant une came tournante 49 par un axe 50, dont une portion coopère avec l'extrémité 47 du coulisseau 44. Le levier 48 est monté tournant par son extrémité 51 autour d'un axe 52, autour duquel tourne une roue dentée d'entraînement 53, qui est de préférence reliée au mouvement d'entraînement d'une montre prévue dans l'enregistreur (non représenté). L'autre extrémité 54 du levier 48 est relié à un ressort 55 assurant le rappel dudit levier vers un taquet 56 solidaire du bouton sélecteur (ledit taquet est visible aux figures 4a à 4c). Le coulisseau 44 est par ailleurs soumis à l'action d'un ressort 56 tendant à le tirer vers la charnière de la porte, c'est-à-dire vers un contact avec la came tournante 49 ou la butée 57 selon le cas. Les différentes positions d'enregistrement sont organisées comme décrit ci-après en regard des figures 4a, 4b, 4c :

- Figure 4a : le taquet 56 solidaire du bouton sélecteur de l'enregistreur est dans une position correspondant au repos, comme l'indique le symbole 58, et dans cette position le levier 48 écarte la came tournante 49 de l'extrémité 47 du coulisseau 44. Le coulisseau est alors en appui contre la butée associée 57, et la partie active de la came ne contacte pas cette extrémité 47, mais continue cependant à tourner du fait de l'entraînement calé sur la montre de l'enregistreur : le tracé 59 obtenu est alors un simple trait fin, dont l'épaisseur est de l'ordre de 0,1 mm.

- Figure 4b : le bouton sélecteur a été tourné dans une position qui correspond au travail ou au chargement, ou analogue, comme l'indique le symbole 60. Dans cette position, la came tournante 49 contacte périodiquement l'extrémité 47 du coulisseau 44, laquelle extrémité oscille entre une position de contact entre la butée 57 et une position de contact contre la came 49, ce qui produit un tracé d'enregistrement 61, dont l'amplitude $\underline{e}$ est par exemple de l'ordre de 0,8 mm.

- Figure 4c : le taquet 56 est tourné dans une troisième position correspondant à la maintenance, comme l'indique le symbole 62. Cette position correspond ici à l'amplitude maximale d'oscillation du coulisseau 44, ce qui produit un tracé d'enregistrement 63 dont l'amplitude $\underline{e}$ est par exemple de l'ordre de 1,6 mm.

Il va de soi que l'on pourrait prévoir plus de trois positions, produisant des tracés d'enregistrement d'amplitudes différentes : par exemple, avec quatre positions, on pourrait distinguer le repos, la conduite, le chargement et la maintenance.

Ainsi, une fois les deux disques porte-diagramme 6, 11 mis en place sur la couronne de support 4, autour de l'arbre d'entraînement 64, l'opérateur rabat une patte de fixation 65 pour maintenir correctement la partie centrale des deux disques contre la couronne support 4, des griffes d'entraînement 66 pouvant être également prévues pour améliorer cet entraînement. Une fois les deux disques porte-diagramme mis en place, il suffit de refermer la porte de l'enregistreur, ce qui a pour effet de placer automatiquement la table secondaire 22 dans sa position d'écriture, comme illustré en figure 2b. Le dispositif est alors prêt pour l'enregistrement, l'entraînement desdits disques étant communiqué par l'arbre 67 du boîtier 1, ainsi que cela est habituel pour de tels enregistreurs.

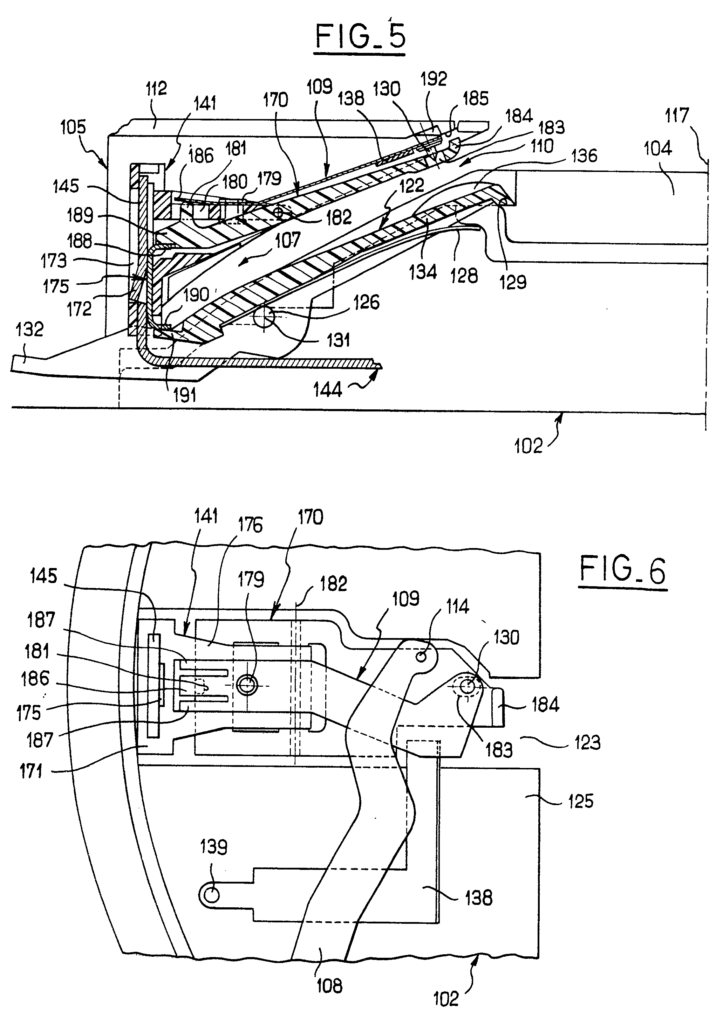

Le dispositif inscripteur conforme à la variante qui va être décrite en référence aux figures 5 à 12c comporte un certain nombre d'organes identiques ou analogues à ceux du dispositif inscripteur précité : à cet effet, les organes homologues de la variante qui va être décrite seront affectés des mêmes références, augmentées de cent.

On retrouve ainsi la porte 102 articulée sur le boîtier de l'enregistreur, et comportant une couronne support 104 sur laquelle sont montés les deux disques porte-diagramme. Le dispositif inscripteur comporte une table fixe 105 montée sur la porte 102, cette table fixe supportant d'une part une portion d'un premier disque porte-diagramme. 106 (visible seulement sur la figure 11b), et définissant avec la porte 102 un espace 107 dans lequel sont disposés les premier et second organes scripteurs 108, 109, et une fente 110 communiquant avec ledit espace pour insérer une portion d'un deuxième disque porte-diagramme 111 (également visible seulement sur la figure 11b). La table fixe 105 comporte un couvercle 112, qui présente une lumière traversante (non représentée) pour laisser passer la pointe 114 de l'organe scripteur 108, et ainsi permettre une inscription sur la face inférieure du premier disque porte-diagramme 106 par ledit organe scripteur (l'organe scripteur 108 et sa pointe 114 n'ont été représentés que sur la figure 6). Le premier organe scripteur 108 est de préférence monté tournant autour d'un axe parallèle à l'axe commun 117 des disques porte-diagramme 106, 111. Lorsque la porte 102 de l'enregistreur est fermée, on peut ainsi réaliser un enregistrement simultanément sur la face supérieure du premier disque porte-diagramme 106 (au moyen d'organes scripteurs conventionnels non représentés ici) et sur la face inférieure dudit disque porte-diagramme (au moyen de la pointe d'inscription 114 du premier organe scripteur 108).

Il est en outre prévu une table secondaire 122 disposée dans l'espace 107 précité, pour permettre une inscription sur la face supérieure du deuxième disque porte-diagramme 111 par le second organe scripteur 109. Cette table secondaire 122 est logée dans un puits radial 123 de la porte 102, ladite porte présentant en outre une face inclinée 125 permettant de définir la fente 110 d'insertion du deuxième disque porte-diagramme 111. La table secondaire 122 est de préférence montée sur un axe support 126 porté par deux paliers solidaires de la porte 102, et prévu au voisinage du puits radial 123 de celle-ci. En outre, une lame ressort 128 rappelle en permanence la table secondaire 122 vers une position d'effacement correspondant à l'insertion du deuxième disque porte-diagramme 111, et de préférence vers une butée d'appui 129 portée par la porte 102. Ainsi, lorsque la porte est ouverte, la table secondaire 122 est en appui contre la butée 129, de façon à libérer au maximum l'accès par la fente 110 d'insertion du deuxième disque porte-diagramme 111. Par ailleurs, il convient de faire basculer la table secondaire 122 vers une position d'écriture dans laquelle ladite table agit comme un presseur appliquant le deuxième disque porte-diagramme 111 contre la pointe 130 de l'organe scripteur 109 associé : à cet effet, la table secondaire 122 présente, au-delà de son axe d'articulation 131, une patte d'extrémité 132 qui saille hors de la table fixe 105, ladite patte coopérant avec le bord du boîtier (non représenté) à la fermeture de la porte 102 pour amener automatiquement ladite table secondaire dans sa position d'écriture. La table secondaire 122 présente une portion d'extrémité 134 servant ainsi à presser le deuxième disque porte-diagramme 111 contre l'organe scripteur associé, ladite portion s'étendant naturellement de l'autre côté de l'axe d'oscillation de la table secondaire par rapport à la patte d'extrémité saillante 132. La portion d'extrémité 134 présente, en sa face tournée vers le deuxième disque porte-diagramme 111, deux rebords longitudinaux 136 définissant une fente 137, de façon à permettre la détection de l'absence dudit disque porte-diagramme au moyen d'une lame de contact 138 portée par la table fixe 105 (la fente 137 n'est visible que sur les figures schématiques 12a, 12b, 12c), ladite lame de contact élastique étant fixée par un rivet 139 sur le bloc de la table fixe 105 (mieux visible sur la figure 6).

Conformément à un aspect essentiel de cette variante de l'invention, le dispositif inscripteur comporte en outre un cache mobile d'escamotage 170 associé au second organe scripteur 109 : ce cache mobile est disposé dans l'espace 107 défini par la table fixe 105 et la porte 102, et il est de plus déplaçable entre une position d'escamotage, lorsque la table secondaire 122 est en position d'effacement correspondant à l'insertion du deuxième disque porte-diagramme 111, dans laquelle la pointe 130 dudit organe scripteur est rentrée pour être écartée du passage emprunté par ledit deuxième disque, et une position d'écriture, lorsque la table secondaire 122 est en position d'écriture, dans laquelle ladite pointe est saillante pour permettre une inscription correcte sur la portion concernée du deuxième disque porte-diagramme 111.

Comme pour le dispositif inscripteur précédemment décrit, le deuxième organe scripteur 109 est de préférence monté coulissant dans la porte 102, par l'intermédiaire d'un coulisseau 144 mobile en translation parallèlement à la face intérieure de la porte 102, ledit coulisseau supportant à une extrémité un cavalier 141 portant ledit organe scripteur et étant relié par son autre extrémité à des moyens d'actionnement disposés dans la porte (non représentés ici). Il est alors particulièrement avantageux de monter le cache mobile d'escamotage 170 sur le cavalier 141 portant le deuxième organe scripteur 109, ledit cache étant disposé entre ledit organe scripteur et la table secondaire 122.

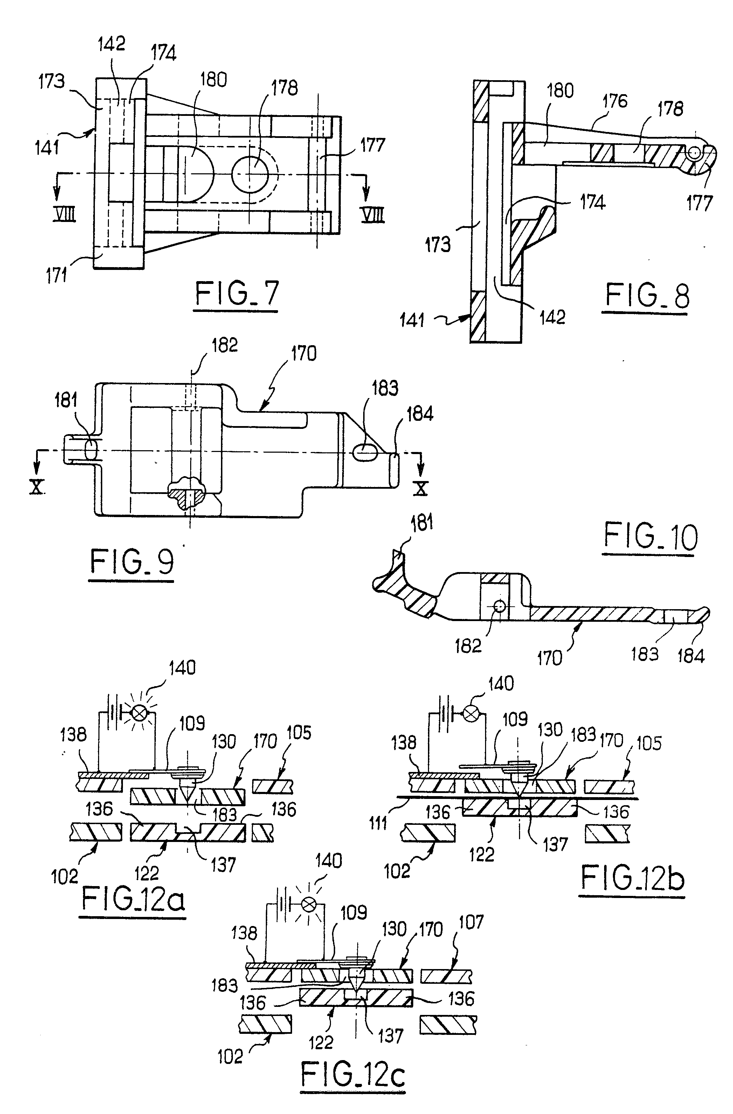

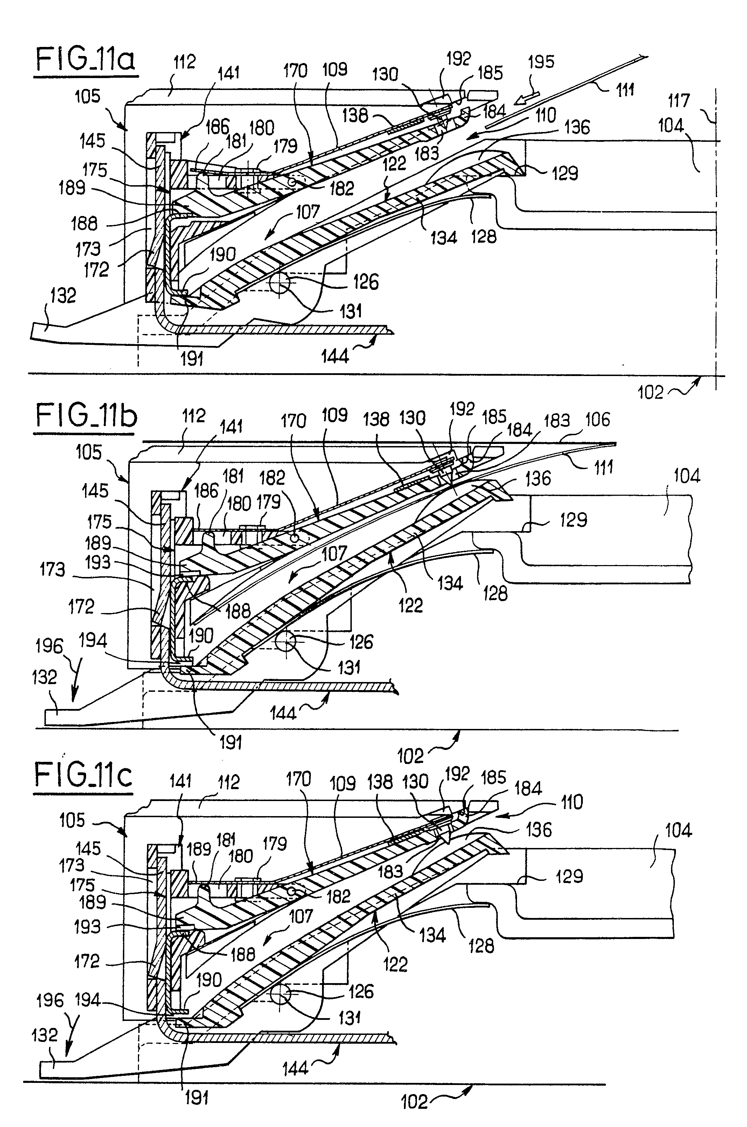

Le cavalier 141 servant de support à l'organe scripteur 109 est cependant légèrement modifié par rapport à l'organe homologue du dispositif inscripteur précédemment décrit. La structure particulière du cavalier 141 sera mieux comprise en se reportant aux figures 7 et 8. On distingue en effet une portion formant console 171 présentant une rainure centrale 142 pour recevoir l'extrémité 145 de coulisseau 144, ladite extrémité présentant en outre une patte de verrouillage 172 passant dans une ouverture associée 173 de la console 171. Ladite console présente en outre une seconde rainure 174, parallèle à la première rainure 142, prévue pour le passage d'un organe intermédiaire de couplage 175 qui sera décrit en détail plus loin. Le cavalier 141 présente également une portion en porte-à-faux 176 se raccordant à la portion formant console 171, et se terminant ici par un palier 177 supportant l'axe de pivotement du cache mobile d'escamotage 170. Il est naturellement possible de prévoir un cache mobile d'escamotage mobile en translation, mais on aboutit à une structure plus simple avec un cache monté pivotant sur le cavalier 141 : lorsque la porte 102 supporte également une table secondaire 122 montée pivotante sur ladite porte, il est en particulier possible de faire en sorte que l'axe 131 de la table secondaire 122 et 182 du cache mobile d'escamotage 170 soient sensiblement parallèles à la face intérieure de la porte 102. La portion 176 comporte en outre un perçage 178 associé au rivet de fixation 179 du second organe scripteur 109, ainsi qu'une ouverture traversante 180 prévue pour le passage d'une protubérance associée 181 du cache mobile d'escamotage 170.

Les figures 9 et 10 permettent de mieux comprendre la structure particulière du cache mobile d'escamotage 170. Le cache 170, pivotant autour d'un axe 182, est surtout intéressant pour la structure particulière de ses deux extrémités longitudinales. En son extrémité avant, c'est-à-dire celle qui est adjacente à la pointe 130 du second organe scripteur 109, il est prévu une ouverture légèrement oblongue 183 pour le passage de la pointe 130 du second organe scripteur 109 ; au-delà de ladite ouverture, le cache mobile d'escamotage 170 comporte un becquet 184 destiné à venir en appui contre une butée associée 185 de la table fixe 105 lorsque ledit cache est en position d'écriture. En son extrémité arrière, on distingue la protubérance 181 destinée à coopérer avec un moyen élastique de rappel associé au cache mobile d'escamotage 170 : il est en effet prévu un moyen élastique tel qu'une lame ressort, pour rappeler en permanence le cache mobile d'escamotage 170 vers sa position d'écriture, c'est-à-dire vers son appui contre la butée associée 185. Le mode de réalisation qui est décrit illustre une autre variante présentant une structure particulièrement simple, dans laquelle le moyen élastique précité est constitué par une portion 186 du second organe scripteur 109 lui-même, cette portion étant en appui contre la protubérance associée 181 du cache mobile d'escamotage 170. Comme on peut le voir sur la figure 6, l'extrémité arrière de l'organe scripteur 109 est ici sensiblement dentelée, de façon à définir une patte centrale 186 assurant la fonction de rappel élastique, disposée entre deux pattes d'extrémité 187 servant à assurer un positionnement correct dudit organe scripteur.

Il est par ailleurs particulièrement avantageux de faire en sorte que le déplacement du cache mobile d'escamotage 170 résulte directement du mouvement de la table secondaire 122, grâce à la présence d'un organe intermédiaire de couplage. On est ainsi tout à fait assuré que le cache mobile d'escamotage remplit effectivement sa fonction. Comme cela a été représenté sur la figure 5, l'organe intermédiaire de couplage est ici une pièce coulissante 175 se déplaçant, à la manière d'un coulisseau, dans une rainure associée 174 du cavalier 141. En fait, la pièce coulissante 175 comporte deux pattes saillantes 188 et 190 : la première patte 188 coopère avec l'extrémité arrière 189 du cache mobile d'escamotage 170, tandis que la seconde patte 190 coopère avec un becquet associé 191 de la table secondaire 122. La transmission du mouvement entre la table secondaire 122 et le cache mobile d'escamotage 170 est ainsi assurée d'une façon à la fois simple et fiable. Il convient cependant de faire en sorte que cette pièce coulissante 175 ne puisse pas interférer avec le bon fonctionnement du dispositif lors d'un enregistrement : ainsi, lorsque le cache mobile d'escamotage 170 et la table secondaire 122 sont en position d'écriture (la porte 102 étant lors nécessairement fermée), des jeux de sécurité 193 et 194 sont de préférence assurés pour supprimer tout contact en fonctionnement entre les pattes saillantes 188 et 190, et les parties associées dudit cache et de ladite table secondaire respectivement. Ces jeux de sécurités sont visibles sur la figure 11b qui sera décrite ci-après. Il va de soi cependant que l'on pourrait remplacer cette pièce coulissante 175 par tout moyen de couplage ou transmission équivalent.

Comme cela est visible sur la figure 5, la lame de contact 138 servant à la détection de conditions anormales de fonctionnement est disposée entre le second organe scripteur 109 et le cache mobile d'escamotage 170. Lorsque la porte 102 est fermée, le second organe scripteur 109 est en appui par l'effet de son élasticité contre la lame de contact 138, cet appui ne pouvant de ici être supprimé que par la présence du second disque porte-diagramme entre la table secondaire 122 et le cache mobile d'escamotage 170, ce qui permet d'assurer à la fois la détection de l'absence dudit disque et la détection d'une détérioration dudit organe scripteur. On notera en particulier la présence d'une réservation 192 dans le couvercle 112 de la table fixe 105, permettant d'éviter toute butée de l'extrémité de l'organe scripteur 109 en position d'écriture, comme cela est visible en figure 11b.

Examinons maintenant les différentes positions relatives des organes constitutifs du dispositif de l'invention, et ce en regard des figures 11a, 11b, 11c, et des illustrations schématiques associées 12a, 12b, 12c.

En figure 11a, la porte 102 est en position ouverte, et l'espace 107 doit être organisé pour que l'insertion du deuxième disque porte-diagramme 111 par la fente 110 s'effectue de la meilleure façon possible, sans risque de détérioration dudit disque. A cet effet, la table secondaire 122 est maintenue en appui contre la butée associée 129 par l'action de son ressort 128 ; en outre, et conformément à la présente variante, le pivotement de la table secondaire 122 a induit un pivotement dans la même direction pour le cache mobile escamotable 170, grâce à l'organe de couplage coulissant 175 : ce mouvement de pivotement, correspondant pour ledit cache à une position d'effacement, a pour effet immédiat que la pointe 130 de l'organe scripteur 109 est rentrée pour être écartée du passage emprunté par le deuxième disque porte-diagramme 111, lequel peut de ce fait être aisément inséré (flèche 195) par la fente 110 sans risque que ledit disque ne soit abîmé ou détérioré en passant au regard de la pointe dudit organe scripteur. La position des organes mobiles illustrés en figure 11a est en outre parfaitement stable, grâce à la présence des deux lames élastiques de rappel 128 et 186.

Après avoir inséré le deuxième disque porte-diagramme 111, puis mis en place le premier disque porte-diagramme 106, l'opérateur referme la porte 102 de l'enregistreur, ce qui amène les différents organes du dispositif dans la position illustrée en figure 11b. La remontée de la table secondaire 122 résultant de l'action de fermeture de la porte 102 a induit automatiquement un pivotement correspondant du cache mobile d'escamotage 170, pour amener celui-ci en position d'écriture, position dans laquelle la pointe 130 de l'organe scripteur 109 saille au-delà de la lumière 183 pour permettre une inscription correcte sur la portion concernée du deuxième disque porte-diagramme 111. Il est à noter que, dans cette position, le cache mobile d'escamotage 170 est maintenu en butée haute (becquet 184 contre la butée associée 185) par l'action de la lame-ressort 186; la table secondaire 122 agit par ailleurs comme un presseur pour le deuxième disque porte-diagramme 111, à l'encontre de l'élasticité naturelle de l'organe scripteur 109. Les jeux de sécurités 193 et 194 évitent enfin toute interférence avec le bon fonctionnement du dispositif.

Si par mégarde l'opérateur omet de mettre en place le deuxième disque porte-diagramme 111, et referme la porte 102, l'élasticité naturelle de l'organe scripteur 109 amène automatiquement ledit organe scripteur en appui sur la lame de contact 138, sans pour cela que la table secondaire 122 et le cache mobile escamotable 170 n'occupent une position modifiée par rapport à la figure précédente : ceci permet aisément de détecter cette situation anormale, comme on va le voir ci-après en regard des figures schématiques 12a, 12b, 12c.

Les figures 12a à 12c permettent en effet de bien comprendre comment fonctionne un tel système de détection. On distingue sur ces figures un circuit électrique comportant un témoin d'alerte 140, ici lumineux, le circuit étant fermé lorsque l'organe scripteur 109 contacte la lame 138. Ce témoin lumineux est de préférence prévu en face avant du cadran de la porte 102, et il pourrait naturellement être remplacé par un témoin sonore.

. Figure 12a : la porte 102 est ouverte, et la pointe 130 de l'organe scripteur 109 est en position d'escamotage ; l'organe scripteur 109 est quant à lui, par son élasticité naturelle, en appui sur la lame de contact 138, de sorte que le circuit de contrôle est fermé : le témoin lumineux 140 s'allume.

. Figure 12b : la position est normale, et la pointe d'inscription 130 de l'organe scripteur 109 est au contact du deuxième disque porte-diagramme 111, de sorte que le circuit de contrôle est ouvert : la lampe est éteinte. Il convient de noter que l'organe scripteur 109 ne peut être relevé que par la présence du deuxième disque porte-diagramme 111.

. Figure 12c : il s'agit ici d'une condition anormale, correspondant à l'absence du deuxième disque porte-diagramme 111 : la pointe d'écriture 130 pénètre alors, grâce à l'élasticité propre de l'organe scripteur 109, dans la fente 137, ce qui ferme le contact : le témoin lumineux s'allume. Bien que la position correspondante n'ait pas été représentée, il est aisé de constater que ce dispositif permet de détecter également une deuxième condition anormale, à savoir la détérioration de l'organe scripteur 109 (stylet cassé). En effet, l'absence de pointe d'écriture 130 fait que l'organe scripteur 109 défectueux contacte automatiquement la lame 138 et ferme le circuit : le témoin 140 s'allume encore.

Ainsi, une fois les deux disques porte-diagramme 106, 111 mis en place sur la couronne de support 104, l'opérateur rabat une patte de fixation associée (non représentée) pour maintenir correctement la partie centrale des deux disques contre ladite couronne support, des griffes d'entraînement pouvant être également prévues pour améliorer cet entraînement. Une fois les deux disques porte-diagramme mis en place, il suffit alors de refermer la porte de l'enregistreur, ce qui a pour effet de placer automatiquement la table secondaire 122 et le cache mobile d'escamotage 170 dans leur position d'écriture respective, comme illustré en figure 11b. Le dispositif est alors prêt pour l'enregistrement, l'entraînement des deux disques porte-diagramme étant communiqué par l'arbre central du boîtier, ainsi que cela est habituel pour de tels enregistreurs.

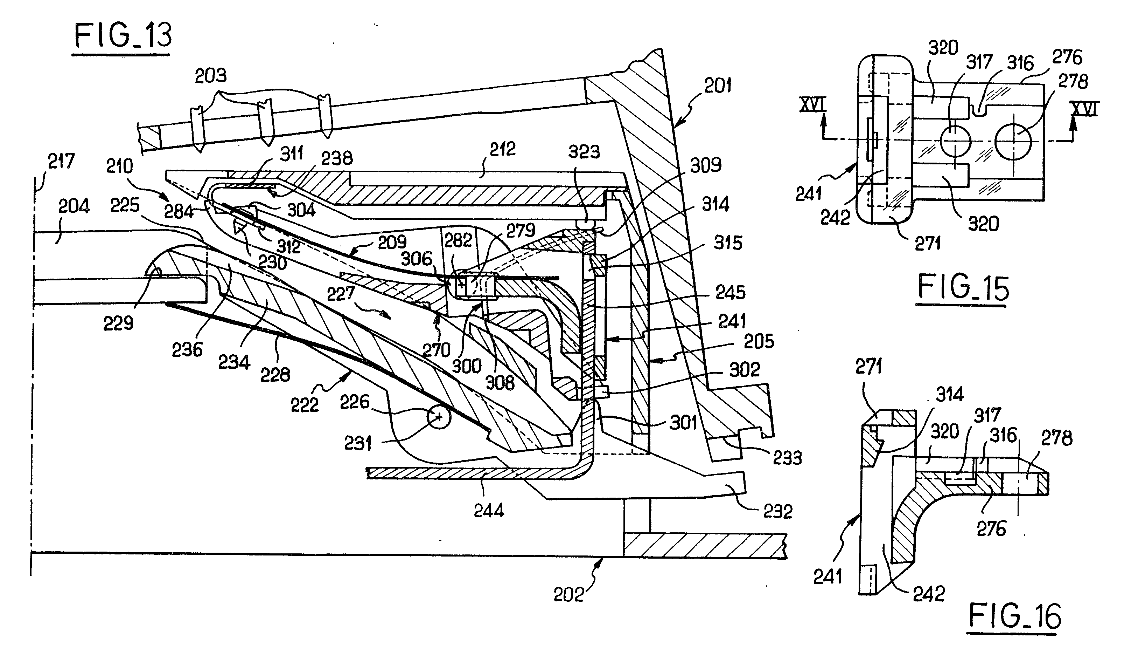

Le dispositif inscripteur conforme à une autre variante qui va être décrite en référence aux figures 13 à 24c comporte un certain nombre d'organes identiques ou analogues à ceux du dispositif inscripteur décrit en premier lieu : à cet effet, les organes homologues de cette autre variante qui va être décrite seront affectés des mêmes références, augmentées de deux cents.

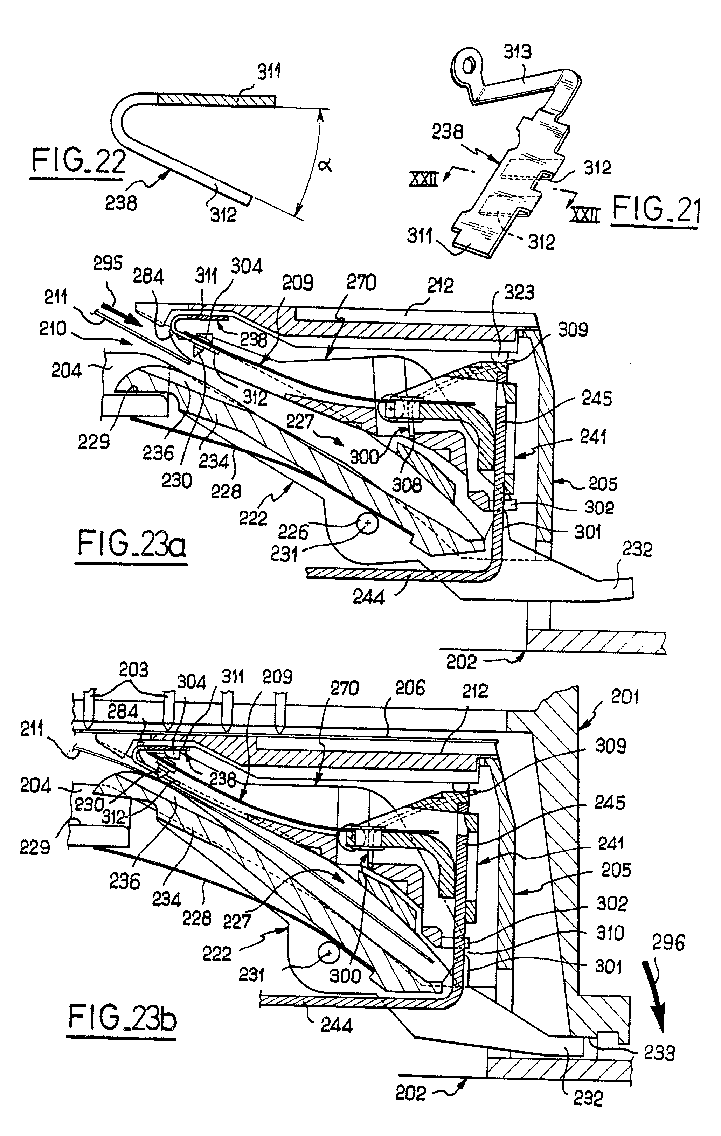

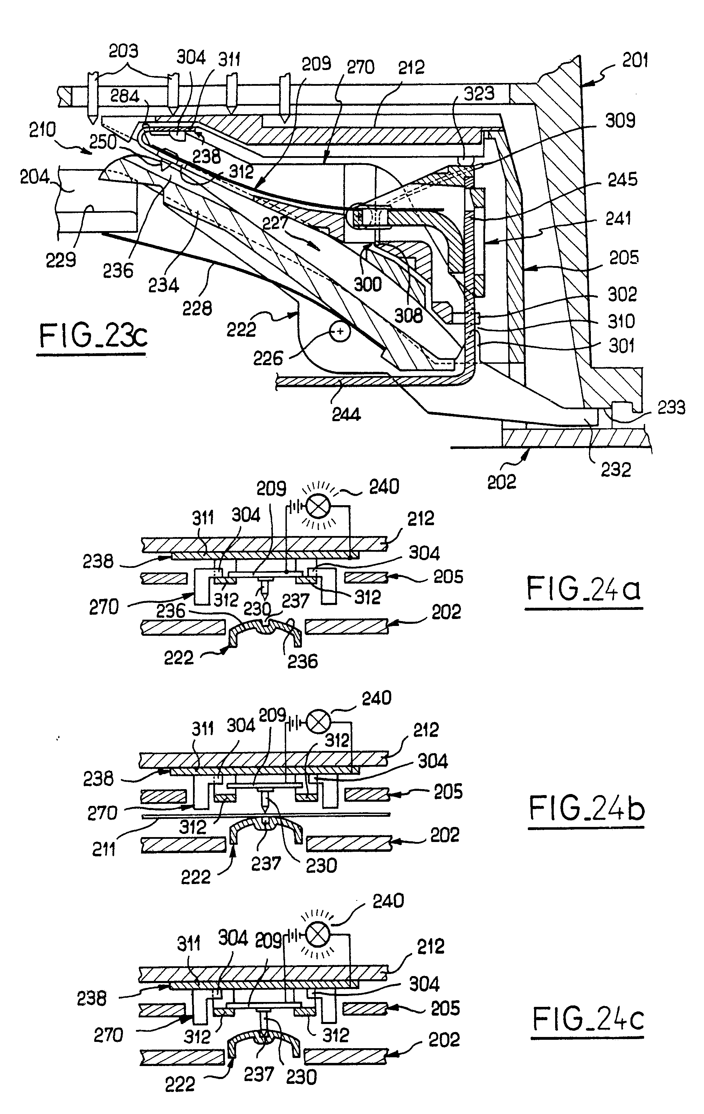

On retrouve ainsi la porte 202 articulée sur le boîtier de l'enregistreur 201, et comportant une couronne support 204 sur laquelle peuvent être montés les deux disques porte-diagramme. Le dispositif inscripteur comporte une table fixe 205 montée sur la porte 202, cette table fixe supportant d'une part une portion d'un premier disque porte-diagramme 206 (visible seulement sur la figure 23b), et définissant avec la porte 202 un espace 227 dans lequel sont disposés les premier et second organes scripteurs 208, 209, et une fente 210 communiquant avec ledit espace pour insérer une portion d'un deuxième disque porte-diagramme 211 (également visible seulement sur la figure 23b). La table fixe 205 comporte un couvercle 212, qui présente une lumière traversante (non représentée) pour laisser passer la pointe 214 de l'organe scripteur 208, et ainsi permettre une inscription sur la face inférieure du premier disque porte-diagramme 206 par ledit organe scripteur (l'organe scripteur 208 et sa pointe 214 n'ont été représentés que sur la figure 14). Le premier organe scripteur 208 est de préférence monté tournant autour d'un axe parallèle à l'axe commun 217 des disques porte-diagramme 206, 211. Lorsque la porte 202 de l'enregistreur est fermée, on peut ainsi réaliser un enregistrement simultanément sur la face supérieure du premier disque porte-diagramme 206 (au moyen d'organes scripteurs conventionnels 203) et sur la face inférieure dudit disque porte-diagramme (au moyen de la pointe d'inscription 214 du premier organe scripteur 208).

Il est en outre prévu une table secondaire 222 disposée dans l'espace 227 précité, pour permettre une inscription sur la face supérieure du deuxième disque porte-diagramme 211 par le second organe scripteur 209. Cette table secondaire 222 est logée dans un puits radial 223 de la porte 202, ladite porte présentant en outre une face inclinée 225 permettant de définir la fente 210 d'insertion du deuxième disque porte-diagramme 211. La table secondaire 222 est ici montée sur un axe support 226 porté par deux paliers solidaires de la porte 202, et prévu au voisinage du puits radial 223 de celle-ci. En outre, une lame ressort 228 rappelle en permanence la table secondaire 222 vers une position d'effacement correspondant à l'insertion du deuxième disque porte-diagramme 211, et de préférence vers une butée d'appui 229 portée par la porte 202. Ainsi, lorsque la porte est ouverte, la table secondaire 222 est en appui contre la butée 229 (comme illustré à la figure 23a), de façon à libérer au maximum l'accès par la fente 210 d'insertion du deuxième disque porte-diagramme 211. Par ailleurs, il convient de faire basculer la table secondaire 222 vers une position d'écriture dans laquelle ladite table agit comme un presseur appliquant le deuxième disque porte-diagramme 211 contre la pointe 230 de l'organe scripteur 209 associé : à cet effet, la table secondaire 222 présente, au-delà de son axe d'articulation 231, une patte d'extrémité 232 qui saille hors de la table fixe 205, ladite patte coopérant avec le bord 233 du boîtier à la fermeture de la porte 202 pour amener automatiquement ladite table secondaire dans sa position d'écriture. La table secondaire 222 présente une portion d'extrémité 234 servant ainsi à presser le deuxième disque porte-diagramme 211 contre l'organe scripteur associé, ladite portion s'étendant naturellement de l'autre côté de l'axe d'oscillation de la table secondaire par rapport à la patte d'extrémité saillante 232. La portion d'extrémité 234 présente, en sa face tournée vers le deuxième disque porte-diagramme 211, deux rebords longitudinaux 236 définissant une fente centrale 237, de façon à permettre la détection de l'absence dudit disque porte-diagramme au moyen d'une lame de contact 238 portée par la table fixe 205 (la fente centrale 237 n'est visible que sur les figures schématiques 24a, 24b, 24c), ladite lame de contact élastique (décrite plus en détail ci-après) étant fixée sur le bloc de la table fixe 205 (mieux visible sur la figure 14).

Conformément à un aspect essentiel de cette autre variante de l'invention, le dispositif inscripteur comporte en outre un cache mobile d'escamotage 270 associé au second organe scripteur 209 : ce cache mobile est disposé dans l'espace 227 défini par la table fixe 205 et la porte 202, et il est de plus déplaçable entre une position d'escamotage, lorsque la table secondaire 222 est en position d'effacement correspondant à l'insertion du deuxième disque porte-diagramme 211, dans laquelle la pointe 230 dudit organe scripteur est rentrée pour être écartée du passage emprunté par ledit deuxième disque, et une position d'écriture, lorsque la table secondaire 222 est en position d'écriture, dans laquelle ladite pointe est saillante pour permettre une inscription correcte sur la portion concernée du deuxième disque porte-diagramme 211. De plus, la table secondaire 222 et le cache mobile d'escamotage 270 sont tous deux montés pivotants selon deux axes 231 et 282 sensiblement parallèles entre eux, respectivement sur la porte 202 et sur la table fixe 205.

Un tel montage de la table secondaire 222 et du cache mobile d'escamotage 270 est intéressant dans la mesure où il permet d'éviter tout mouvement parasite dudit cache mobile d'escamotage lors du fonctionnement du dispositif enregistreur : en effet, la référence spatiale du cache mobile d'escamotage reste fixe, ce qui permet de s'assurer en fonctionnement qu'il ne peut y avoir de mouvement parasite dudit cache mobile risquant d'entraîner un frottement de celui-ci sur le disque porte-diagramme, un tel frottement pouvant même aller jusqu'à un marquage dudit disque, ce qui est extrêmement désavantageux.

Comme pour le dispositif inscripteur décrit en premier lieu, le deuxième organe scripteur 209 est de préférence monté coulissant dans la porte 202, par l'intermédiaire d'un coulisseau 244 mobile en translation parallèlement à la face intérieure de la porte 202, ledit coulisseau supportant à une extrémité un cavalier 241 portant ledit organe scripteur et étant relié par son autre extrémité à des moyens d'actionnement disposés dans la porte (non représentés ici). Il convient d'observer que le cavalier 241 ne sert ici qu'au support du deuxième organe scripteur 209, le cache mobile d'escamotage 270 étant totalement indépendant dudit cavalier.

Le cavalier 241 servant de support à l'organe scripteur 209 est cependant légèrement modifié par rapport à l'organe homologue du dispositif inscripteur décrit en premier lieu. La structure particulière du cavalier 241 sera mieux comprise en se reportant aux figures 15 et 16. On distingue en effet une portion formant console 271 présentant une rainure centrale 242 pour recevoir l'extrémité 245 du coulisseau 244. La fixation du cavalier 241 sur l'extrémité 245 du coulisseau 244 se fait par simple clipsage, par coopération entre une facette inclinée 314 dudit cavalier et une ouverture 315 de ladite extrémité, ainsi que cela est visible sur la figure 13. Par ailleurs, le cavalier 241 présente également une portion en porte-à-faux 276 se raccordant à la portion formant console 271, ladite portion en porte-à-faux permettant une fixation aisée et précise du deuxième organe scripteur 209 : on distingue ainsi une protubérance latérale 316 et un trou borgne 317 coopérant respectivement avec une échancrure 318 et une ouverture 319 du deuxième organe scripteur 209, comme cela est visible sur la figure 14. L'extrémité arrière du deuxième organe scripteur 209 est ainsi positionnée entre deux rebords 320 du cavalier 241, la fixation se faisant par exemple au moyen d'un rivet 279 passant dans l'orifice associé 278 dudit cavalier.

Ainsi que cela est visible sur la figure 13, la table secondaire 222 et le cache mobile d'escamotage 270 sont normalement découplés, sauf lorsque ladite table secondaire est en position d'effacement et ledit cache mobile en position d'escamotage, par l'intermédiaire d'un contact de butée. La table secondaire 222 comporte par exemple un becquet arrière saillant 301 pouvant coopérer avec une patte arrière associée 302 du cache mobile d'escamotage 270 : une telle coopération intervient à l'insertion du deuxième disque porte-diagramme 211, comme illustré à la figure 23a qui sera commentée plus loin. Cependant, lorsque le cache mobile d'escamotage 270 et la table secondaire 222 sont en position d'écriture, position illustrée à la figure 23b, il est souhaitable de prévoir un jeu de sécurité 310 pour éviter tout contact en fonctionnement entre le becquet arrière saillant 301 et la patte arrière associée 302.

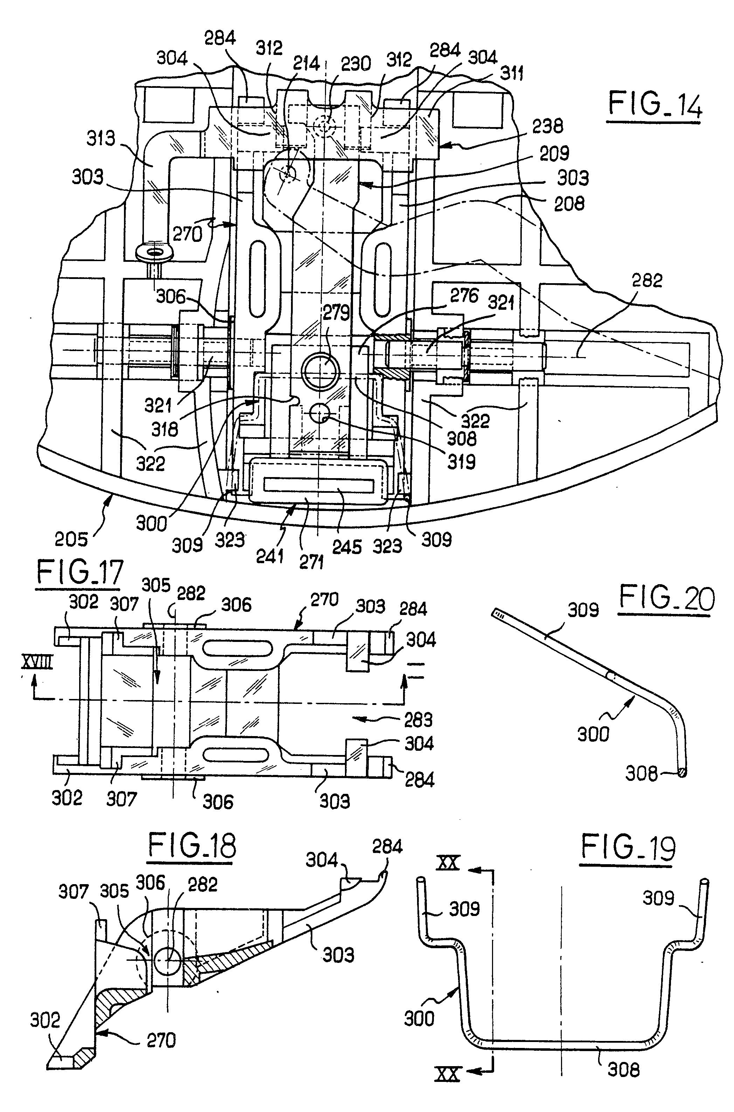

Il est par ailleurs avantageux que le dispositif inscripteur comporte des moyens élastiques tendant à rappeler en permanence la table secondaire 222 vers sa position d'effacement et le cache mobile d'escamotage 270 vers sa position d'écriture. Pour la table secondaire 222, on pourra utiliser une lame ressort 228 comme dans le dispositif du brevet principal : la table secondaire 222 est alors rappelée vers une position d'appui contre une butée associée 229 solidaire de la porte 202. Le découplage entre la table secondaire 222 et le cache mobile d'escamotage 270 nécessite d'utiliser des moyens de rappel indépendants pour ces deux organes : ainsi, le rappel du cache mobile d'escamotage 270 est assuré par un moyen élastique indépendant, et de préférence un organe ayant la forme d'un étrier ressort tel que l'étrier 300 mieux visible sur les figures 19 et 20.

La structure particulière du cache mobile d'escamotage 270 sera mieux comprise en se référant aux figures 17 et 18 commentées ci-après. Le cache mobile 270, susceptible de pivoter autour d'un axe transversal 282, a ici sensiblement la forme d'un H dont deux branches 303 définissent un passage 283 pour l'extrémité du second organe scripteur 209 portant la pointe d'inscription 230. Les deux branches 303 du cache mobile d'escamotage 270 entre lesquelles passe l'extrémité du second organe scripteur 209 se terminent de préférence par un becquet 284 facilitant l'insertion du deuxième disque porte-diagramme 211 sous ledit cache mobile lorsque celui-ci est en position d'escamotage : si l'on se reporte à la figure 23a, on constate en effet que les becquets 284 évitent tout risque d'insertion entre la table fixe 205 et le cache mobile, et guident sans l'abimer le deuxième disque porte-diagramme 211 dans l'espace 227.

De plus, l'une au moins des deux branches 303 du cache mobile d'escamotage 270 présente un ergot 304 servant à limiter le débattement angulaire dudit cache mobile par coopération avec la lame de contact 238 servant à la détection de l'absence du disque porte-diagramme, ainsi que cela sera décrit plus loin en détail (sur la figure 17, on distingue un ergot 304 sur chacune des deux branches 303, mais il s'agit naturellement seulement d'un exemple).

Dans la partie centrale du cache mobile d'escamotage 270, on distingue deux organes de centrage 306 calés sur l'axe de pivotement 282 : si l'on se reporte à la figure 14, on distingue plus précisément l'agencement de l'axe du cache mobile d'escamotage, grâce à un pivot 321 prévu de part et d'autre dudit cache mobile, et passant dans des nervures associées 322 de la porte 202. En arrière de l'axe 282, on distingue en outre une fente transversale 305 dans laquelle est normalement reçue, à la manière d'un encastrement, une partie de l'étrier ressort 300 assurant le rappel du cache mobile d'escamotage 270. On distingue enfin, en partie arrière du cache mobile d'escamotage 270, deux becquets de positionnement 307, et enfin au moins une patte arrière 302 prévue pour la coopération avec le becquet saillant 301 de la table mobile 222. Si l'on se reporte aux figures 19 et 20, on comprend mieux la forme particulière de l'étrier ressort 300 qui a pour fonction d'assurer le rappel du cache mobile d'escamotage 270 vers sa position d'écriture, c'est-à-dire vers une position d'appui contre une butée 285 solidaire de la table fixe 205, par ses becquets avant 284. L'étrier ressort 300 comporte ainsi une branche centrale 308, qui est normalement reçue à la manière d'un encastrement dans la fente transversale 305 précitée du cache mobile d'escamotage 270, et deux branches latérales 309 dont le cintrage est adapté à la géométrie particulière de cette partie du dispositif inscripteur, chacune des extrémités des branches 309 venant se positionner sous un ergot d'accrochage 323 prévu sur la table fixe 205 (les ergots 323 sont visibles sur les figures 13 et 14).

Comme pour le dispositif inscripteur décrit en premier lieu, la table secondaire 222 présente une portion d'extrémité 234 servant à presser le deuxième disque porte-diagramme 211, la face de ladite portion tournée vers ledit disque présentant une fente longitudinale 237 permettant la détection de l'absence dudit disque au moyen d'une lame de contact 238 portée par la table fixe 205.

Cependant, la lame de contact 238 a ici une structure particulière, qui lui permet, outre sa fonction électrique de détection précitée, de remplir une autre fonction mécanique de butée pour le cache mobile d'escamotage 270, ainsi que cela va être décrit ci-après. Si l'on se reporte à la vue en perspective de la figure 21, et à la coupe associée de la figure 22, on constate que la lame de contact 238 comporte une partie principale transversale 311, et deux pattes incurvées 312 solidaires de ladite partie principale, et s'étendant vers l'arrière pour définir une forme en U mieux visible sur la figure 22. Si l'on se reporte à la figure 14, on constate que la lame de contact 238 est fixée par les extrémités de sa partie principale 311 sur deux nervures 322 de la table fixe 205. Les deux pattes incurvées 312 s'étendent vers l'arrière pour définir chacune une forme en U dans laquelle vient se loger l'extrémité du second organe scripteur 209, de telle façon que la pointe 230 de cet organe scripteur puisse saillir vers le bas au-delà desdites pattes. La lame de contact 238 est de préférence une pièce métallique unique, avec deux pattes longitudinales 312 repliées inférieurement sous une partie principale 311 sensiblement rectangulaire, et une cosse latérale de raccordement 313 mieux visible sur les figures 14 et 21 ; pour le repliage des deux pattes 312, on pourra choisir un angle $\alpha$ (visible sur la figure 22) de l'ordre de 25°.

Si l'on se reporte à la figure 14, on constate que les deux ergots 304 saillants des branches 303 du cache mobile d'escamotage 270 se prolongent transversalement de telle façon que leur extrémité passe dans la forme en U définie par chacune des pattes 312 et la partie principale 311 de la lame de contact 238. La lame de contact 238 peut ainsi assurer une fonction supplémentaire de butée mécanique pour le cache mobile d'escamotage 270, et ce aussi bien en position haute qu'en position basse de celui-ci : en position haute du cache mobile 270 (position illustrée aux figures 23b et 23c), les ergots 304 viennent en appui contre la partie principale 311 de la lame de contact, en dessous de celle-ci, alors qu'en position basse dudit cache mobile, les ergots 304 viennent en appui contre les pattes repliées associées 312 (position illustrée en figure 23a).

Par ailleurs, comme pour le dispositif inscripteur décrit en premier lieu, la table secondaire 222 présente, au-delà de son axe d'articulation, une patte d'extrémité 232 qui saille hors de la table fixe 205, ladite patte coopérant avec le rebord 233 du boîtier à la fermeture de la porte 202 pour amener automatiquement ladite table secondaire dans sa position d'écriture. En l'espèce, lorsque la porte 202 est fermée, le second organe scripteur 209 est en appui par l'effet de son élasticité contre les deux pattes 312 de la lame de contact 238, cet appui ne pouvant en fait être supprimé que par la présence d'un disque porte-diagramme entre la table secondaire 222 et le cache mobile d'escamotage 270, ce qui permet d'assurer à la fois la détection de l'absence dudit disque et la détection d'une détérioration dudit organe scripteur.

Il convient maintenant d'examiner les différentes positions relatives des organes constitutifs du dispositif de l'invention, et ce en regard des figures 23a, 23b, 23c, et des illustrations schématiques associées 24a, 24b, 24c. Ces figures correspondent en fait respectivement aux figures 7a, 7b, 7c d'une part, et 8a, 8b, 8c d'autre part.

En figure 23a, la porte 202 est en position ouverte, et l'espace 227 doit être organisé pour que l'insertion du deuxième disque porte-diagramme 211 par la fente 210 s'effectue de la meilleure façon possible, sans risque de détérioration dudit disque. A cet effet, la table secondaire 222 est maintenue en appui contre la butée associée 229 par l'action de sa lame ressort associée 228 ; en outre, et conformément à la présente variante, le pivotement de la table secondaire 222 a induit (après une rotation de quelques degrés en raison du jeu de sécurité 310) un pivotement dans la même direction pour le cache mobile d'escamotage 270, grâce à la coopération entre le becquet saillant 301 et la patte arrière associée 302. Ce mouvement de pivotement, correspondant pour ledit cache mobile à une position d'effacement, a pour effet immédiat que la pointe 230 de l'organe scripteur 209 devient rentrée, pour être ainsi automatiquement écartée du passage emprunté par le deuxième disque porte-diagramme 211, lequel peut de ce fait être aisément inséré (flèche 295) par la fente 210 sans risque que lesdits disques ne soient abimés ou détériorés en passant au regard de la pointe dudit organe scripteur. La position des organes mobiles illustrée en figure 23a est en outre parfaitement stable, grâce à la présence des moyens élastiques associés, à savoir la lame ressort 228 pour la table mobile 222, et l'étrier ressort 300 pour le cache mobile d'escamotage 270.

Après avoir inséré le deuxième disque porte-diagramme 211, puis mis en place le premier disque porte-diagramme 206, l'opérateur referme la porte 202 de l'enregistreur, ce qui amène les différents organes du dispositif dans la position illustrée en figure 23b. La remontée de la table secondaire 222 résulte automatiquement de l'action de fermeture de la porte 202, par coopération entre le rebord 233 et la patte d'extrémité 232. Le cache mobile 270 peut librement pivoter à son tour, par l'action de l'étrier ressort associé 300, ce qui l'amène en position d'écriture, ou de butée haute, position dans laquelle la pointe 230 de l'organe scripteur 209 peut effectuer une inscription normale sur la portion concernée du deuxième disque porte-diagramme 211. Il est à noter que, dans cette position, le cache mobile d'escamotage 270 reste maintenu en butée haute (ergots 304 contre la partie principale 311 de la lame de contact 238), et ce sous l'action du seul étrier ressort 300. La table secondaire 222 agit par ailleurs comme un presseur pour le deuxième disque porte-diagramme 211, à l'encontre de l'élasticité naturelle de l'organe scripteur 209. Le jeu de sécurité 310 évite enfin toute interférence avec le bon fonctionnement du dispositif.

Si par mégarde l'opérateur omet de mettre en place le deuxième disque porte-diagramme 211, et qu'il referme la porte 202, l'élasticité naturelle de l'organe scripteur 209 amène automatiquement ledit organe scripteur en appui sur les pattes repliées 312 de la lame de contact 238, sans pour cela que la table secondaire 222 et le cache mobile d'escamotage 270 n'occupent une position modifiée par rapport à la figure précédente : ceci permet de détecter aisément cette situation anormale, comme on va le voir ci-après en regard des figures schématiques 24a, 24b, 24c.

Les figures 24a à 24c, correspondant respectivement aux positions illustrées aux figures 23a à 23c, permettent en effet de bien comprendre comment fonctionne un tel système de détection. Comme pour le dispositif décrit en premier lieu, on distingue sur ces figures un circuit électrique comportant un témoin d'alerte 240, ici lumineux, le circuit étant fermé lorsque l'organe scripteur 209 contacte les pattes 312 de la lame de contact 238. Ce témoin lumineux est de préférence prévu en face avant du cadran de la porte 202, et il pourrait naturellement être remplacé par un témoin sonore.

. Figure 24a : la porte 202 est ouverte, et la pointe 230 de l'organe scripteur 209 est en position d'escamotage, grâce à l'action du cache mobile d'escamotage 270 ; l'organe scripteur 209 est quant à lui, par son élasticité naturelle, en appui sur les pattes 312 de la lame de contact 238, de sorte que le circuit de contrôle est fermé : le témoin lumineux 240 s'allume.

. Figure 24b : la position correspond à une position de fonctionnement normal, et la pointe d'inscription 230 de l'organe scripteur 209 est au contact du deuxième disque porte-diagramme 211, de sorte que le circuit de contrôle est ouvert : le témoin lumineux 240 s'éteint. Il convient de noter que l'organe scripteur 209 ne peut être relevé que par la présence du deuxième disque porte-diagramme 211.

. Figure 24c : il s'agit ici d'une condition anormale, correspondant à l'absence du deuxième disque porte-diagramme 211 : la pointe d'écriture 230 pénètre alors, grâce à l'élasticité propre de l'organe scripteur 209, dans la fente centrale 237 de l'extrémité de la table mobile 222, ce qui ferme le circuit de contrôle, de sorte que le témoin lumineux 240 s'allume. Bien que la position correspondante n'ait pas été représentée, il est aisé de constater que ce dispositif permet de détecter également une deuxième condition anormale, à savoir la détérioration de l'organe scripteur 209 (stylet cassé). En effet, l'absence de pointe d'écriture 230 fait que l'organe scripteur 209 défectueux contacte automatiquement les pattes 312 de la lame de contact 238, ce qui ferme le circuit de contôle : le témoin 240 s'allume encore.

Ainsi, une fois les deux disques porte-diagramme 206, 211 mis en place sur la couronne de support 204, l'opérateur rabat une patte de fixation associée (non représentée) pour maintenir correctement la partie centrale des deux disques contre ladite couronne de support, des griffes d'entraînement pouvant être également prévues pour améliorer cet entraînement. Une fois les deux disques porte-diagramme mis en place, il suffit alors de refermer la porte de l'enregistreur, ce qui a pour effet de placer automatiquement la table secondaire 222 et le cache mobile d'escamotage 270 dans leur position d'écriture respective, comme illustré en figure 23b. Le dispositif est alors prêt pour l'enregistrement, l'entraînement des deux disques porte-diagramme étant communiqué par l'arbre central du boîtier, ainsi que cela est habituel pour de tels enregistreurs.

Le dispositif inscripteur de l'invention, conformément aux différentes variantes qui ont été décrites ci-dessus, permet ainsi un mode d'enregistrement particulièrement précis au moyen d'organes scripteurs disposés entre deux disques porte-diagramme, avec notamment une inscription sur les deux faces du premier disque porte-diagramme.

Bien que le dispositif inscripteur de l'invention soit plus spécialement destiné à une utilisation avec deux disques porte-diagramme, il est à noter qu'un enregistrement avec un seul disque est également possible : il suffit alors de poser ce disque directement sur la table fixe, comme s'il s'agissait du support naturel que représenterait le prolongement de la face intérieure de la porte articulée ; on pourra naturellement prévoir dans de tels cas un organe rapporté bouchant la fente prévue pour l'insertion du deuxième disque porte-diagramme, afin d'éviter toute erreur de manipulation.

L'invention n'est pas limitée au mode de réalisation qui vient d'être décrit, mais englobe toute variante qui reprendrait, avec des moyens équivalents, les caractéristiques essentielles figurant aux revendications.

## Revendications

1. Dispositif inscripteur pour enregistreur à deux disques porte-diagramme, ledit enregistreur comportant un boîtier, une porte articulée sur ledit boîtier et un mécanisme d'entraînement des disques porte-diagramme, ledit dispositif inscripteur comportant des moyens de support et des organes scripteurs permettant une inscription simultanée des deux disques porte-diagramme, caractérisé par le fait qu'il comporte une table fixe (5, 105, 205) montée sur la porte (2, 102, 202), ladite table fixe supportant d'une part une portion d'un premier disque porte-diagramme (6, 106, 206), et définissant d'autre part avec ladite porte un espace (7, 107, 207) dans lequel sont disposés un premier organe scripteur (8, 108, 208) et un second organe scripteur (9, 109, 209), et une fente (10, 110, 210) communiquant avec ledit espace pour insérer une portion d'un deuxième disque porte-diagramme (11, 111, 211), ladite table fixe présentant une lumière (13) pour permettre une inscription sur la face inférieure dudit premier disque porte-diagramme par ledit premier organe scripteur, et par le fait qu'il comporte également une table secondaire (22, 122, 222), disposée dans ledit espace, pour permettre une inscription sur la face supérieure dudit deuxième disque porte-diagramme par ledit second organe scripteur.

2. Dispositif inscripteur selon la revendication 1, caractérisé par le fait que le premier organe scripteur (8) est monté tournant autour d'un axe (16) parallèle à l'axe commun (17) des disques porte-diagramme (6, 11).

3. Dispositif inscripteur selon la revendication 2, caractérisé par le fait que le premier organe scripteur (8) est fixé sur un axe-support (19) monté sur la porte (2), au voisinage de la périphérie de celle-ci.

4. Dispositif inscripteur selon l'une des revendications 1 à 3, caractérisé par le fait que le premier organe scripteur (8) donne une inscription correspondant au régime moteur.

5. Dispositif inscripteur selon l'une des revendications 1 à 4, caractérisé par le fait que la table secondaire (22, 122, 222) est logée dans un puits radial (23, 123, 223) de la porte (2, 102, 202), et est montée oscillante entre une position d'effacement correspondant à l'insertion du deuxième disque portediagramme, et une position d'écriture.

6. Dispositif inscripteur selon la revendication 5, caractérisé par le fait que la table secondaire (22) est montée sur un axe (26) porté par deux paliers (27) solidaires de la porte et prévus au voisinage du puits radial (23) de celle-ci.

7. Dispositif inscripteur selon l'une des revendications 5 et 6, caractérisé par le fait qu'un moyen élastique, tel qu'une lame-ressort (28), est prévu pour rappeler la table secondaire (22) vers sa position d'effacement, de préférence vers une butée d'appui (29) portée par la porte (2).

8. Dispositif inscripteur selon l'une des revendications 5 à 7, caractérisé par le fait que la table secondaire (22) présente, au-delà de son axe d'articulation, une patte d'extrémité (32) qui saille hors de la table fixe (5), ladite patte coopérant avec le bord du boîtier (1) à la fermeture de la porte (2) pour amener automatiquement ladite table secondaire dans sa position d'écriture.

9. Dispositif inscripteur selon l'une des revendications 5 à 8, caractérisé par le fait que la table secondaire (22) présente une portion d'extrémité (34) servant à presser le deuxième disque porte-diagramme contre l'organe scripteur associé (9), la face de ladite portion tournée vers ledit disque porte-diagramme présentant une fente longitudinale (37) permettant la détection de l'absence dudit disque au moyen d'une lame de contact (38) portée par la table fixe (5).

10. Dispositif inscripteur selon la revendication 9, caractérisé par le fait que la lame de contact (38) est disposée sur le passage du deuxième organe scripteur (9), afin de pouvoir également détecter une détérioration dudit organe scripteur.

11. Dispositif inscripteur selon l'une des revendications 1 à 10, caractérisé par le fait que le deuxième organe scripteur (9) est monté coulissant dans la porte (2), le déplacement dudit organe scripteur se faisant dans un plan passant par l'axe commun des disques porte-diagramme (6, 11).

12. Dispositif inscripteur selon la revendication 11, caractérisé par le fait qu'il comporte des moyens de support associés au deuxième organe scripteur (9), avec un coulisseau (44) mobile en translation parallèlement à la face intérieure de la porte (2), ledit coulisseau supportant à une extrémité un cavalier (41) portant ledit organe scripteur, et étant relié par son autre extrémité à des moyens d'actionnement disposés dans la porte (2).

13. Dispositif inscripteur selon la revendication 12, caractérisé par le fait que les moyens d'actionnement comportent un levier (48) se déplaçant parallèlement à la face intérieure de la porte (2), ledit levier portant une came tournante (49) que contacte le coulisseau (44) et étant déplaçable entre des positions angulaires prédéterminées correspondant au mode d'utilisation.

14. Dispositif inscripteur selon la revendication 13, caractérisé par le fait que la came tournante (49) est entraînée par une roue dentée (53), ladite roue dentée étant calée sur l'axe de pivotement (52) du levier (48) et reliée au mouvement d'entraînement d'une montre prévue dans l'enregistreur.

15. Dispositif inscripteur selon l'une des revendications 13 et 14, caractérisé par le fait que le coulisseau (44) est soumis à l'action d'un ressort (56) le tirant en direction de la came tournante (49), une butée fixe (57) étant en outre prévue pour l'appui dudit coulisseau lorsque la position du levier correspond à un mode d'utilisation indiqué par un trait d'enregistrement circulaire continu.

16. Dispositif inscripteur selon l'une des revendications 1 à 15, caractérisé par le fait que la table fixe (5) est un bloc indépendant, fixé sur la porte (2), ledit bloc présentant de préférence un couvercle amovible (12) pour faciliter l'accès aux premier et second organes scripteurs (8, 9).

17. Dispositif inscripteur selon les revendications 1 et 5, caractérisé par le fait qu'il comporte en outre un cache mobile d'escamotage (170) associé au second organe scripteur (109), ledit cache étant disposé dans ledit espace (107) défini par la table fixe (105) et la porte (102), et étant déplaçable entre une position d'escamotage, lorsque la table secondaire (122) est en position d'effacement correspondant à l'insertion du deuxième disque porte-diagramme (111), dans laquelle la pointe (130) dudit organe scripteur est rentrée pour être écartée du passage emprunté par ledit deuxième disque, et une position d'écriture, lorsque ladite table secondaire est en position d'écriture, dans laquelle ladite pointe est saillante pour permettre une inscription correcte sur la portion concernée du deuxième disque porte-diagramme (111).

18. Dispositif inscripteur selon la revendication 17, dans lequel le deuxième organe scripteur (109) est monté coulissant dans la porte (102), par l'intermédiaire d'un coulisseau (144) mobile en translation parallèlement à la face intérieure de la porte (102), ledit coulisseau supportant à une extrémité un cavalier (141) portant ledit organe scripteur et étant relié par son autre extrémité à des moyens d'actionnement disposés dans la porte (102), caractérisé par le fait que le cache mobile d'escamotage (170) est monté sur le cavalier (141) portant le deuxième organe scripteur (109), en étant disposé entre ledit organe scripteur et la table secondaire (122).

19. Dispositif inscripteur selon la revendication 18, caractérisé par le fait que le cache mobile d'escamotage (170) est monté pivotant sur le cavalier (141).

20. Dispositif inscripteur selon la revendication 19, dans lequel la table secondaire (122) est montée pivotante sur la porte (102), caractérisé par le fait que les axes d'articulation (131) de la table secondaire (122) et (182) du cache mobile d'escamotage (170) sont sensiblement parallèles, leur direction étant en outre parallèle à la face intérieure de la porte (102).

21. Dispositif inscripteur selon l'une des revendications 19 et 20, caractérisé par le fait que le cache mobile d'escamotage (170) présente au voisinage d'une de ses extrémités une ouverture (183) pour le passage de la pointe (130) du second organe scripteur (109), le cache mobile d'escamotage (170) comportant, au-delà de ladite ouverture, un becquet (184) venant en appui contre une butée associée (185) de la table fixe (105) lorsque ledit cache est en position d'écriture.

22. Dispositif inscripteur selon la revendication 21, caractérisé par le fait qu'un moyen élastique, tel qu'une lame-ressort (186), est prévu pour rappeler en permanence le cache mobile d'escamotage (170) vers sa position d'écriture, c'est-à-dire vers son appui contre la butée associée (185).

23. Dispositif inscripteur selon la revendication 22, caractérisé par le fait que le moyen élastique est constitué par une portion (186) du second organe scripteur (109), qui est en appui contre une protubérance associée (181) du cache mobile d'escamotage (170).

24. Dispositif inscripteur selon l'une des revendications 17 à 23, caractérisé par le fait que le déplacement du cache mobile d'escamotage (170) résulte directement du mouvement de la table secondaire (122), grâce à un organe intermédiaire de couplage (175).

25. Dispositif inscripteur selon les revendications 18 et 24, caractérisé par le fait que l'organe intermédiaire de couplage est une pièce coulissante (175) se déplaçant dans une rainure associée (174) du cavalier (141).

26. Dispositif inscripteur selon la revendication 25, caractérisé par le fait que la pièce coulissante (175) comporte deux pattes saillantes (188, 190), la première (188) coopérant avec l'extrémité (189) du cache mobile d'escamotage (170) opposée à celle qui est adjacente à la pointe (130) du second organe scripteur (109), et la seconde (190) coopérant avec un becquet associé (191) de la table secondaire (122).

27. Dispositif inscripteur selon la revendication 26, caractérisé par le fait que, lorsque le cache mobile d'escamotage (170) et la table secondaire (122) sont en position d'écriture, un jeu de sécurité (193, 194) est assuré pour supprimer tout contact en fonctionnement entre les pattes saillantes (188, 190) et les parties associées dudit cache et de ladite table.

28. Dispositif inscripteur selon l'une des revendications 17 à 27, dans lequel la table secondaire (122) présente une portion d'extrémité (134) servant à presser le deuxième disque porte-diagramme (111), la face de ladite portion tournée vers ledit disque présentant une fente longitudinale (137) permettant la détection de l'absence dudit disque au moyen d'une lame de contact (138) portée par la table fixe (105), caractérisé par le fait que la lame de contact (138) est disposée entre le second organe scripteur (109) et le cache mobile d'escamotage (170).

29. Dispositif inscripteur selon la revendication 28. dans lequel la table secondaire (122) présente, au-delà de son axe d'articulation, une patte d'extrémité (132) qui saille hors de la table fixe (105), ladite patte coopérant avec le bord du boîtier à la fermeture de la porte (102) pour amener automatiquement ladite table secondaire dans sa position d'écriture, caractérisé par le fait que, lorsque la porte (102) est fermée, le second organe scripteur (109) est en appui par l'effet de son élasticité contre la lame de contact (138), cet appui ne pouvant être supprimé que par la présence d'un disque porte-diagramme entre la table secondaire (122) et le cache mobile d'escamotage (170), ce qui permet d'assurer à la fois la détection de l'absence dudit disque et la détection d'une détérioration dudit organe scripteur.

30. Dispositif inscripteur selon les revendications 1 et 5, caractérisé en ce qu'il comporte en outre un cache mobile d'escamotage (270) associé au second organe scripteur (209), ledit cache mobile étant disposé dans ledit espace (207) défini par la table fixe (205) et la porte (202), et étant déplaçable entre une position d'escamotage, lorsque la table secondaire (222) est en position d'effacement correspondant à l'insertion du deuxième disque porte-diagramme (211), dans laquelle la pointe (230) dudit organe scripteur est rentrée pour être écartée du passage emprunté par ledit deuxième disque, et une position d'écriture, lorsque ladite table secondaire est en position d'écriture, dans laquelle ladite pointe est saillante pour permettre une inscription correcte sur la portion concernée du deuxième disque porte-diagramme (211), et en ce que la table secondaire (222) et le cache mobile d'escamotage (270) sont tous deux montés pivotants selon deux axes (231 et 282) sensiblement parallèles entre eux, ladite table secondaire étant montée pivotante sur la porte (202) et ledit cache mobile d'escamotage étant monté pivotant sur la table fixe (205).

31. Dispositif inscripteur selon la revendication 30. caractérisé par le fait que la table secondaire (222) et le cache mobile d'escamotage (270) sont normalement découplés, sauf lorsque ladite table secondaire est en position d'effacement et ledit cache mobile en position d'escamotage, par l'intermédiaire d'un contact de butée.

32. Dispositif inscripteur selon la revendication 31. caractérisé par le fait que la table secondaire (222) comporte un becquet arrière saillant (301) pouvant coopérer avec une patte arrière associée (302) du cache mobile d'escamotage (270).

33. Dispositif inscripteur selon les revendications 31 et 32, caractérisé par le fait que, lorsque le cache mobile d'escamotage (270) et la table secondaire (222) sont en position d'écriture, un jeu de sécurité (310) est assuré, pour éviter tout contact en fonctionnement entre le becquet arrière saillant (301) et la patte arrière associée (302).

34. Dispositif inscripteur selon l'une des revendications 31 à 33, caractérisé par le fait qu'il comporte des moyens élastiques (228, 300) tendant à rappeler en permanence la table secondaire (222) vers sa position d'effacement et le cache mobile d'escamotage (270) vers sa position d'écriture.

35. Dispositif inscripteur selon la revendication 34, caractérisé par le fait que la table secondaire (222) et le cache mobile d'escamotage (270) sont rappelés vers une position d'appui contre une butée associée (229, 311) respectivement solidaire de la porte (202) et de la table fixe (205).

36. Dispositif inscripteur selon l'une des revendications 34 et 35, caractérisé par le fait que des moyens de rappel indépendants sont prévus, selon une lame ressort (228) pour la table secondaire (222) et un étrier ressort (300) pour le cache mobile d'escamotage (270).

37. Dispositif inscripteur selon l'une des revendications 30 à 36, caractérisé par le fait que le cache mobile d'escamotage (270) a sensiblement la forme d'un H dont deux branches (303) définissent un passage pour l'extrémité du second organe scripteur (209) portant la pointe d'inscription (230).

38. Dispositif inscripteur selon les revendications 35 et 37, caractérisé par le fait que les deux branches (303) du cache mobile d'escamotage (270) entre lesquelles passe l'extrémité du second organe scripteur (209) se terminent par un becquet (284) facilitant l'insertion du deuxième disque porte-diagramme (211) sous ledit cache mobile lorsque celui-ci est en position d'escamotage.

39. Dispositif inscripteur selon les revendications 36 et 37, caractérisé par le fait que le cache mobile d'escamotage (270) présente une fente transversale (305) dans laquelle est reçue une branche centrale (308) de l'étrier ressort (300) assurant le rappel dudit cache mobile.

40. Dispositif inscripteur selon l'une des revendications 30 à 39, dans lequel la table secondaire (222) présente une portion d'extrémité (234) servant à presser le deuxième disque porte-diagramme (211), la face de ladite portion tournée vers ledit disque présentant une fente longitudinale (237) permettant la détection de l'absence dudit disque au moyen d'une lame de contact (238) portée par la table fixe (205), caractérisé par le fait que la lame de contact (238) comporte une partie principale transversale (311) montée sur la table fixe (205), et deux pattes incurvées (312) solidaires de ladite partie principale et s'étendant vers l'arrière pour définir une forme en U dans laquelle vient se loger l'extrémité du second organe scripteur (209), de telle façon que la pointe (230) de cet organe scripteur puisse saillir vers le bas au-delà desdites pattes.

41. Dispositif inscripteur selon la revendication 40, dans lequel la table secondaire (222) présente, au-delà de son axe d'articulation, une patte d'extrémité (232) qui saille hors de la table fixe (205), ladite patte coopérant avec le bord (233) du boîtier à la fermeture de la porte (202) pour amener automatiquement ladite table secondaire dans sa position d'écriture, caractérisé par le fait que, lorsque la porte (202) est fermée, le second organe scripteur (209) est en appui par l'effet de son élasticité contre les deux pattes (312) de la lame de contact (238), cet appui ne pouvant être supprimé que par la présence d'un disque porte-diagramme entre la table secondaire (222) et le cache mobile d'escamotage (270), ce qui permet d'assurer à la fois la détection de l'absence dudit disque et la détection d'une détérioration dudit organe scripteur.

42. Dispositif inscripteur selon l'une des revendications 37 à 39, et la revendication 40, caractérisé par le fait que l'une au moins des deux branches (303) du cache mobile d'escamotage (270) entre lesquelles passe l'extrémité du second organe scripteur (209) présente un ergot (304) dont l'extrémité passe dans la forme en U définie par une patte (312) de la lame de contact (238) et la partie principale (311) de ladite lame de contact, de telle sorte que la lame de contact (238) assure en outre une fonction de butée pour le cache mobile d'escamotage (270), aussi bien en position haute de celui-ci contre ladite partie principale qu'en position basse de celui-ci contre ladite patte.

43. Dispositif inscripteur selon l'une des revendications 40 à 42, caractérisé par le fait que la lame de contact (238) est une pièce métallique unique, avec deux pattes longitudinales (312) repliées inférieurement sous une partie principale (311) sensiblement rectangulaire, et une cosse latérale de raccordement (313).

FIG.1

FIG. 2a

FIG. 2b

FIG_3a  FIG_3b  FIG_3c

FIG_4a

FIG_4b

FIG_4c

FIG_5

FIG_6

FIG_7

FIG_8

FIG_9

FIG_10

FIG_12a

FIG_12b

FIG_12c

FIG.11a

FIG.11b

FIG.11c

FIG_13

FIG_15

FIG_16

FIG_14

FIG_17

FIG_20

FIG_18

FIG_19

FIG.22

FIG.21

FIG.23a

FIG.23b

FIG.23c

FIG.24a

FIG.24b

FIG.24c

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 246 122 (JAEGER)<br>* Résumé; revendications; figures *<br>--- | 1 | G 07 C 5/12<br>G 01 P 1/14 |
| A,D | EP-A-0 207 820 (JAEGER)<br>* Résumé; revendications; figures *<br>--- | 1 | |
| A,D | FR-A-2 251 870 (INSTRUMENTS)<br>* Revendications; figures *<br>--- | 1 | |
| A,D | FR-A-2 164 323 (KIENZLE)<br>--- | | |
| A,D | EP-A-0 012 223 (KIENZLE)<br>--- | | |
| A | DE-A-2 917 329 (KIENZLE)<br>----- | | |

DOMAINES TECHNIQUES RECHERCHES (Int. Cl.4)

G 07 C
G 01 P
G 01 D

**Le présent rapport a été établi pour toutes les revendications**

| Lieu de la recherche | Date d'achèvement de la recherche | Examinateur |
|---|---|---|
| LA HAYE | 19-05-1989 | MEYL D. |

FPO FORM 1503 03.82 (P0402)